# EUROPEAN PATENT APPLICATION

(11) **EP 4 534 268 A1**
(43) Date of publication of application: **09.04.2025**
(21) Application number: 23811357.5
(22) Date of filing: 30.01.2023
(51) Int. Cl.: B29B 17/02, B32B 27/00, B32B 27/32, B65D 65/40

(54) **METHOD FOR PRODUCING RECYCLED PLASTIC**

(30) Priority: 24.05.2022 JP 2022084259
(71) Applicant: artience Co., Ltd., Chuo-ku Tokyo 104-0031 (JP); Toyo Ink Co., Ltd., Tokyo 104-8378 (JP)
(72) Inventor: SUZUKI, Yuya, Tokyo 104-8378 (JP); SHIKIJI, Wataru, Tokyo 104-8378 (JP); YASUDA, Hideki, Tokyo 104-8378 (JP)
(74) Representative: Becker, Eberhard
(86) International application number: PCT/JP2023/002928
(87) International publication number: WO 2023/228476

(57) **Abstract**

This method for producing recycled plastic obtains recycled plastic from a packaging material (A). The packaging material (A) has a plastic laminate and a printed layer provided on at least one surface of the plastic laminate. The plastic laminate, which is on the outermost surface of the packaging material (A), does not include a chromatic colored ink. The amount of polyolefin resin in the packaging material (A) is 80 mass% or more. The method for producing recycled plastic includes step 1 of obtaining a laminate (B) by immersing the packaging material (A) in a release liquid including a surfactant to remove 85 mass% or more of the printed layer, and a step 2 of melting and kneading the laminate (B) using an extrusion device provided with a screw and a discharge section.

## Description

### Technical Field

Packages composed of plastic films, plastic bottles, and other plastic products involve an issue of environmental pollution when discarded or dumped as litter in the ocean. Therefore, there has been growing interest in recycling plastic products in recent years. Generally, plastic products that are made primarily from one type of resin, such as bottles, caps, and bags of single-layer films, are relatively easy to recycle. In particular, collection systems have been established for polyester (PET) bottles and polystyrene (PS) food trays by local governments and retailers such as supermarkets, making bottle-to-bottle and tray-to-tray recycling possible.

On the other hand, in the case of food packaging packages (packaging materials) that have multi-layer structures, a plastic laminate in which various plastic base materials are bonded together is used as the film base material. For example, polyester base materials, nylon base materials (NY), polypropylene base materials (PP), polyethylene base materials (PE), etc. are used, and these different types of plastic base materials are not compatible with each other. For this reason, the material recycling for the packaging materials is considered difficult.

Thus, as described in Patent Document 1, mono-material packaging materials using only a polyolefin base material as the plastic base material have been studied. However, food packaging packages may be provided with a pattern such as a design using a printed layer made of printing ink or the like. In the case where a package including such a printed layer is directly recycled, the chromatic colors included in the printed layer are mixed, so only plastic raw materials colored with dark colors such as black and gray are obtained. Once polyolefin is colored, it is difficult to make it colorless and transparent. Therefore, it is preferable to be able to recycle materials of colorless and transparent polyolefin that has no restriction on use.

On the other hand, Patent Document 2 discloses a technique for peeling base materials from each other in a plastic laminate that has an ink layer between the base materials. This technique peels off/removes a printed layer or an adhesive agent layer which is the intermediate layer with an ink cleaner including a surfactant and an alkaline solution, and utilizes mechanical effects carried out in a crusher. Therefore, it is considered difficult to peel off a base material and obtain a plastic base material free of impurities using the above-described technique.

### Citation List

### Patent Documents

[Patent Document 1] Japanese Patent Application Laid-Open No. 2021-160258
[Patent Document 2] Japanese Patent No. 7004124

### SUMMARY OF INVENTION

### Technical Problem

Therefore, the present invention provides a method for efficiently removing a printed layer from a packaging material including the printed layer, and obtaining recycled plastic with little coloring and few foreign matters and air bubbles.

### Solution to Problem

The inventors have conducted extensive research and discovered that the above problem can be solved by using the method for producing recycled plastic described below, thereby completing the present invention.

That is, embodiments of the present invention relate to the following. However, the present invention is not limited to the following embodiments and includes various embodiments.

One embodiment of the present invention relates to a method for producing recycled plastic, which obtains recycled plastic from a packaging material (A), in which the packaging material (A) includes a plastic laminate and a printed layer provided on at least one surface of the plastic laminate, and the printed layer is on an outermost surface of the packaging material (A), the plastic laminate does not include a chromatic colored ink layer, and a content of polyolefin resin in the packaging material (A) is 80% by mass or more. The method for producing recycled plastic includes: a step 1 of obtaining a laminate (B) by immersing the packaging material (A) in a release liquid including a surfactant to remove 85% by mass or more of the printed layer; and a step 2 of melting and kneading the laminate (B) using an extrusion device provided with a screw and a discharge section.

Moreover, one embodiment of the present invention relates to the above-mentioned method for producing recycled plastic, in which the polyolefin resin is at least one selected from a group consisting of polyethylene-based resin and polypropylene-based resin.

Moreover, one embodiment of the present invention relates to the above-mentioned method for producing recycled plastic, in which the plastic laminate includes an adhesive agent layer, and the adhesive agent layer is made of a dry lamination adhesive agent or a non-solvent lamination adhesive agent having an acid value of 10 mgKOH/g or less.

Moreover, one embodiment of the present invention relates to the above-mentioned method for producing recycled plastic, in which a dry coating amount of the adhesive agent layer is 6% by mass or less of a total mass of the plastic laminate.

Moreover, one embodiment of the present invention relates to the above-mentioned method for producing recycled plastic, in which the plastic laminate is laminated by extrusion lamination.

Moreover, one embodiment of the present invention relates to the above-mentioned method for producing recycled plastic, in which the plastic laminate is a co-extrusion molded film.

Moreover, one embodiment of the present invention relates to the above-mentioned method for producing recycled plastic, in which the surfactant includes at least one selected from a group consisting of a nonionic surfactant, an amphoteric surfactant, and an anionic surfactant.

Moreover, one embodiment of the present invention relates to the above-mentioned method for producing recycled plastic, in which the release liquid further includes a basic compound.

Moreover, one embodiment of the present invention relates to the above-mentioned method for producing recycled plastic, in which the release liquid further includes an antifoaming agent, and the antifoaming agent is at least one selected from a group consisting of an emulsion type silicone-based compound, a self-emulsifying type silicone-based compound, and a non-silicone-based compound.

Moreover, one embodiment of the present invention relates to the above-mentioned method for producing recycled plastic, in which the printed layer includes at least one combination selected from a group consisting of urethane resin/vinyl chloride copolymer resin, urethane resin/cellulose resin, and polyamide resin/cellulose resin.

Moreover, one embodiment of the present invention relates to the above-mentioned method for producing recycled plastic, in which a temperature of the melting is 140°C to 250°C.

Moreover, one embodiment of the present invention relates to the above-mentioned method for producing recycled plastic, in which a pressure of the discharge section included in the extrusion device is 15 MPa or less.

Moreover, one embodiment of the present invention relates to the above-mentioned method for producing recycled plastic, in which a rotation speed of the screw included in the extrusion device is 50 RPM to 1000 RPM.

Moreover, one embodiment of the present invention relates to the above-mentioned method for producing recycled plastic, in which the printed layer includes a primer layer that is removable by the release liquid.

Moreover, one embodiment of the present invention relates to the above-mentioned method for producing recycled plastic, in which the primer layer includes an acidic compound.

Moreover, one embodiment of the present invention relates to the above-mentioned method for producing recycled plastic, which further includes a drying step of reducing a moisture content of the laminate (B) to 3% by mass or less.

Moreover, one embodiment of the present invention relates to the above-mentioned method for producing recycled plastic, in which a chlorine content of the laminate (B) is 0.4% by mass or less of a total mass of the laminate (B).

Moreover, one embodiment of the present invention relates to the above-mentioned method for producing recycled plastic, in which the adhesive agent layer includes heat-sealable resin.

The disclosure of this application is related to the subject matters described in Japanese Patent Application No. 2022-084259, filed on May 24, 2022, the entire disclosure of which is incorporated herein by reference.

### Effects of Invention

According to the present invention, it is possible to provide a method for efficiently removing a printed layer from a packaging material including the printed layer, and obtaining recycled plastic with little coloring and few foreign matters and air bubbles.

### DESCRIPTION OF EMBODIMENTS

Hereinafter, embodiments of the present invention will be described in detail. However, the following description of the embodiments or requirements is merely an example of the embodiments of the present invention, and the present invention is not limited to these contents as long as it does not depart from the gist thereof.

In the present invention, the term "printed layer" refers to a layer formed from printing ink, an overcoat agent, or the like. Further, the "primer layer" described later is also one embodiment of the printed layer, and a plurality of printed layers superimposed on one another is also a printed layer. In the following description, a layer among the printed layer and the primer layer that can be removed by a release liquid may be referred to as a "release layer."

One embodiment of the present invention relates to a method for producing recycled plastic, which obtains recycled plastic from a packaging material (A). In this embodiment, the packaging material (A) has a plastic laminate and a printed layer provided on at least one surface of the plastic laminate, the plastic laminate does not include a chromatic colored ink layer, and the content of polyolefin resin in the packaging material (A) is 80% by mass or more. The production method of this embodiment includes: obtaining a laminate (B) by immersing the packaging material (A) in a release liquid including a surfactant to remove 85% by mass or more of the printed layer (step 1); and melting and kneading the laminate (B) using an extrusion device provided with a screw and a discharge section (step 2). According to the production method of this embodiment, the release liquid contains a surfactant, which promotes release of the printed layer and suppresses the printed layer from re-adhering to the laminate (B) even after release. Furthermore, by using the laminate (B) with little coloring and dirt, it is possible to obtain recycled plastic with little coloring and few foreign matters and air bubbles.

### <Packaging material (A)>

In this embodiment, the packaging material (A) has a plastic laminate and a printed layer provided on at least one surface of the plastic laminate. The plastic laminate does not include a chromatic colored ink layer, and the content of polyolefin resin in the packaging material (A) is 80% by mass or more. The term "chromatic colored ink layer" in "the plastic laminate does not include a chromatic colored ink layer" means a layer formed from chromatic colored ink for the purpose of color or design, and is a layer with color that can be clearly seen with the naked eye. This does not exclude cases where the plastic laminate has a coating layer or the like without the intention of coloring, resulting in very light coloring. The plastic laminate has a laminated structure including a base material and a layer other than the base material. Details will be described later.

Examples of the packaging material (A) are given below, but the packaging material (A) is not limited to these. The plastic laminate is preferably laminated by conventionally known methods such as dry lamination, non-solvent lamination, extrusion lamination, and co-extrusion molding. An intermediate base material may also be provided if necessary. Specific examples of the structure of the packaging material (A) may include, but are not limited to, the following structures.

In the structural notations (1) to (16) described below, "/" means the boundary between the layers. The description in parentheses "()" indicates the laminated structure of the plastic laminate. In addition, in the case where a "primer layer" is present, the "printed layer" means the "printed layer excluding the primer layer." Furthermore, in the case where a plurality of layers, such as printed layers, are actually laminated in contact with each other, such as a first printed layer and a second printed layer, the layers are collectively referred to simply as a printed layer. The printed layer is on the outermost surface of the packaging material (A). In the case where a "primer layer" is present, the "printed layer excluding the primer layer" is on the outermost surface.
(1) printed layer/(base material/adhesive agent layer/sealant)
(2) printed layer/(base material/adhesive agent layer/intermediate base material/adhesive agent layer/sealant)
(3) printed layer/(base material/adhesive agent layer/first intermediate base material/adhesive agent layer/second intermediate base material/adhesive agent layer/sealant)
(4) printed layer/(base material/AC agent layer/adhesive layer)
(5) printed layer/(base material/AC agent layer/adhesive layer/sealant)
(6) printed layer/(base material/AC agent layer/adhesive layer/intermediate base material/AC agent layer/adhesive layer/sealant)
(7) printed layer/(base material/adhesive agent layer/intermediate base material/AC agent layer/adhesive layer/sealant)
(8) printed layer/(base material/AC agent layer/adhesive layer/intermediate base material/adhesive agent layer/sealant)
(9) printed layer/primer layer/(base material/adhesive agent layer/sealant)
(10) printed layer/primer layer/(base material/adhesive agent layer/intermediate base material/adhesive agent layer/sealant)
(11) printed layer/primer layer/(base material/adhesive agent layer/first intermediate base material/adhesive agent layer/second intermediate base material/adhesive agent layer/sealant)
(12) printed layer/primer layer/(base material/AC agent layer/adhesive layer)
(13) printed layer/primer layer/(base material/AC agent layer/adhesive layer/sealant)
(14) printed layer/primer layer/(base material/AC agent layer/adhesive layer/intermediate base material/(AC agent layer)/adhesive layer/sealant)
(15) printed layer/primer layer/(base material/adhesive agent layer/intermediate base material/AC agent layer/adhesive layer/sealant)
(16) printed layer/primer layer/(base material/AC agent layer/adhesive layer/intermediate base material/adhesive agent layer/sealant)
(17) printed layer/(base material/adhesive agent layer (for example, heat seal layer))

The above-mentioned "adhesive agent layer" refers to a layer composed of an adhesive. Examples of the adhesive include urethane-based adhesives used in dry lamination and non-solvent lamination, as well as polyolefin resin, heat-sealable resin, and other heat-meltable resin used in extrusion lamination (referred to as "adhesive layer"), where the "adhesive layer" is one embodiment of the adhesive agent layer. In the case where the adhesive agent layer contains heat-sealable resin, the adhesive agent layer is called a heat seal layer. Further, in the above structure, the term "AC agent layer" refers to an anchor coating agent layer, and an anchor coating layer is used to improve the adhesion between the base material and the adhesive layer. In addition, the above-mentioned "AC agent layer" is optional and may or may not be present.

Since the main focus of the present invention is the production of recycled polyolefin resin, the content of polyolefin resin in the packaging material (A) is preferably high. In one embodiment, the packaging material (A) contains polyolefin resin in an amount of 80% by mass or more based on the total mass of the packaging material (A). The content is more preferably 85% by mass or more, even more preferably 90% by mass or more, and still more preferably 95% by mass or more. By including polyolefin resin in the packaging material (A) in the above range, it is possible to easily obtain a molding material which is easy to separate and highly suitable for recycling, has good moldability, and can be used for a variety of applications.

The polyolefin resin is preferably polypropylene-based resin and/or polyethylene-based resin. More preferably, the polypropylene-based resin is a copolymer of propylene with ethylene and/or butene. Furthermore, in order to make a mono-material, the polyolefin resin is even more preferably the same.

### <Base material>

Since the base material is used as a packaging material, the base material is preferably in the form of a film or sheet. In addition, the base material is preferably a polyolefin base material, and more preferably has the same type of (identical) raw material as the intermediate base material and the sealant. The same type of (identical) raw material refers to combinations of polypropylene, polyethylene, and the like.

The content of polyolefin resin of the base material is preferably 50% by mass or more, more preferably 60% by mass or more, even more preferably 70% by mass or more, still more preferably 80% by mass or more, and particularly preferably 90% by mass or more, based on the total mass of the base material. Moreover, the above-mentioned polyolefin base material is more preferably a polypropylene base material and/or a polyethylene base material, and even more preferably a polypropylene base material, and the polypropylene base material is particularly preferably a polypropylene base material which is a copolymer of propylene and ethylene and/or butene.

### <Adhesive agent layer, adhesive layer>

The packaging material (A) may further have an adhesive agent layer and/or an adhesive layer. The adhesive agent layer and/or the adhesive layer is not particularly limited as long as the adhesive agent layer and/or the adhesive layer can bond the respective layers.

Suitable materials for forming the adhesive agent layer include an olefin-based adhesive agent, an acrylic-based adhesive agent, a reactive urethane adhesive agent, etc., and the material is more preferably a reactive urethane adhesive agent which is a reaction product of polyisocyanate and polyol. Suitable materials for forming the adhesive layer include meltable olefin resin, etc. used in extrusion lamination. Additionally, heat-sealable resin, etc. is also suitable. Furthermore, in order to improve the adhesion between the base material and the adhesive layer, an imine-based anchor coating agent or other anchor coating agents may be used. The method for bonding each layer is not particularly limited, and examples thereof include conventionally known methods such as dry lamination, non-solvent lamination, and extrusion lamination.

### [Reactive urethane adhesive agent]

The reactive urethane adhesive agent is preferably a two-liquid type urethane adhesive agent composed of polyol as a main agent and polyisocyanate as a curing agent. In this case, the adhesive agent layer is a reaction product of this urethane adhesive agent.

The polyol may be any compound having two or more hydroxyl groups, and may be selected from known polyol. Examples of the polyol include polyester polyol, polycarbonate polyol, polycaprolactone polyol, polyether polyol, polyolefin polyol, acrylic polyol, silicone polyol, castor oil-based polyol, and fluorine-based polyol. Among these, the polyol preferably includes polyether polyol and/or polyester polyol. The polyol may be an acid-modified product in which some of the hydroxyl groups in the polyol have been acid-modified, or polyol in which urethane bonds have been introduced by reacting some of the hydroxyl groups in the polyol with diisocyanate.

The polyisocyanate may be any compound having two or more isocyanate groups, and may be selected from known polyisocyanate. Examples of the polyisocyanate include aromatic polyisocyanate, aromatic aliphatic polyisocyanate, aliphatic polyisocyanate, alicyclic polyisocyanate, and modified products of these. The polyol may be used alone or in combination of two or more types. The same applies to the polyisocyanate.

From the viewpoint of compatibility during melting and kneading of the laminate (B), the coating amount of the adhesive agent layer is preferably 6% or less by mass in the total packaging material (A), more preferably 5% or less, and even more preferably 4% or less.

Further, the acid value of the adhesive agent layer is preferably 10 mgKOH/g or less, more preferably 8 mgKOH/g or more, even more preferably 6 mgKOH/g or less, and particularly preferably 5 mgKOH/g or less. In the case where the adhesive agent layer has the above-mentioned acid value, the base material and the sealant of the plastic laminate are unlikely to separate in the step of immersing in the release liquid, and only the release layer is efficiently released, so the time for step 1 is shortened.

### [Other components]

In addition to a silane coupling agent, a phosphorus oxygen acid or a derivative thereof, a leveling agent, an antifoaming agent, and a reaction accelerator, the adhesive agent layer may contain an inorganic filler (for example, silica, alumina, mica, talc, aluminum flake, and glass flake), a layered inorganic compound, a stabilizer (for example, an antioxidant, a heat stabilizer, an ultraviolet absorber, and a hydrolysis inhibitor), a rust inhibitor, a thickener, a plasticizer, an antistatic agent, a lubricant, an antiblocking agent, a colorant, a filler, a crystal nucleating agent, a catalyst for adjusting the curing reaction, etc.

### <Intermediate base material>

The packaging material (A) may further have an intermediate base material layer. The intermediate base material preferably includes polyolefin resin, and more preferably has the same raw material as the base material and the sealant. Furthermore, the content of polyolefin resin of the intermediate base material is preferably 50% by mass or more, more preferably 60% by mass or more, even more preferably 70% by mass or more, still more preferably 80% by mass or more, and particularly preferably 90% by mass or more, based on the total mass. Moreover, the polyolefin resin is more preferably polypropylene-based resin and/or polyethylene-based resin, and even more preferably polypropylene-based resin, and the polypropylene-based resin is particularly preferably a copolymer of propylene and ethylene and/or butene.

Examples of the material for forming the intermediate base material include polyolefin-based resin such as low-density polyethylene (LDPE), linear low-density polyethylene (LLDPE), medium-density polyethylene (MDPE), high-density polyethylene (HDPE), an ethylene-vinyl acetate copolymer, a propylene homopolymer, an ethylene-propylene copolymer, etc. The intermediate base material is preferably in the form of a gas barrier base material, for example, a plastic base material having an inorganic vapor deposition layer of aluminum, silica, alumina, etc., or a plastic base material having a layer of a mixture of organic and inorganic components.

### <Sealant>

The sealant refers to a thermoplastic resin layer. The use of the sealant enables heat sealing, and the surface on the sealant side can be protected even in direct contact with the contents. In order to make the laminate into a bag shape, the sealant is preferably the innermost layer. The sealant preferably includes polyolefin resin, and more preferably has the same raw material as the base material and the intermediate base material.

Furthermore, the content of polyolefin resin of the sealant is preferably 50% by mass or more, more preferably 60% by mass or more, even more preferably 70% by mass or more, still more preferably 80% by mass or more, and particularly preferably 90% by mass or more, based on the total mass. Moreover, the polyolefin resin is more preferably polypropylene-based resin and/or polyethylene-based resin, and even more preferably polypropylene-based resin, and the polypropylene-based resin is particularly preferably a copolymer of propylene and ethylene and/or butene.

Examples of the material for forming the sealant include polyolefin-based resin such as low-density polyethylene (LDPE), linear low-density polyethylene (LLDPE), medium-density polyethylene (MDPE), high-density polyethylene (HDPE), an ethylene-vinyl acetate copolymer, a propylene homopolymer, an ethylene-propylene copolymer, etc. One, two or more types of these can be used. The sealant may be composed of a single layer or may be composed of two or more layers. In order to suppress shrinkage during heat sealing, the sealant is preferably a non-stretched film composed of the above-mentioned resin.

The thickness of the sealant is not particularly limited, and is appropriately set depending on the application of the packaging material and the type and properties of the packaged item. The thickness of the sealant is usually preferably 10 µm to 200 µm. Additionally, in the case of a pouch (particularly a retort pouch), the thickness of the sealant is preferably 20 µm to 150 µm, and more preferably 25 µm to 130 µm.

The sealant may be, for example, a sealant having an inorganic vapor deposition layer of aluminum, silica, alumina, etc., or an organic layer of an ethylene-vinyl alcohol copolymer, polyvinyl alcohol, etc. The sealant may also have multiple layers formed by a co-extrusion method.

### <Co-extrusion molded film>

In one embodiment, the plastic laminate is preferably a co-extrusion molded film. The co-extrusion molded film refers to a laminate in which resin layers are laminated by extrusion molding. For example, the co-extrusion molded film may be a laminate in which resin layers composed of polyolefin resin are laminated, or a laminate in which resin layers different from polyolefin resin are laminated. Examples of the material for forming the resin layer include polyolefin-based resin such as low-density polyethylene (LDPE), linear low-density polyethylene (LLDPE), medium-density polyethylene (MDPE), high-density polyethylene (HDPE), acid-modified polyethylene, a propylene homopolymer, acid-modified polypropylene, an ethylene-propylene copolymer, etc., regardless of type.

The method for laminating the resin layers to form the co-extrusion molded film is not particularly limited, and examples thereof include conventionally known methods such as co-extrusion methods based on a T-die method and an inflation method.

### <Plastic laminate>

The plastic laminate constituting the packaging material (A) preferably includes a base material and an adhesive agent layer. For example, the plastic laminate is preferably a laminate or a co-extrusion molded film formed from at least a base material and a sealant. In one embodiment, the plastic laminate may further have a base material (intermediate base material) as an intermediate layer. The base material, the intermediate base material, the sealant, and the coextruded layer that constitutes the co-extrusion molded film preferably have the same raw material. As one embodiment, it is preferable to include a base material and a heat seal layer.

The base material, the intermediate base material, and the sealant, which are primarily made of polyolefin resin and which constitute the plastic laminate as described above, as well as the co-extrusion molded film, are highly resistant to heat during the molding process and to an alkaline aqueous solution that may be used as the release liquid and cleaning liquid described below, and are less susceptible to thermal decomposition, hydrolysis, or the like. Therefore, there is no decrease in molecular weight during recycling, and high recyclability can be maintained.

Furthermore, from the viewpoint of ease of recovery after recycling, suitable examples include biaxially stretched polypropylene (OPP), non-stretched polypropylene (CPP), polyethylene such as low-density polyethylene (LDPE), linear low-density polyethylene (LLDPE), medium-density polyethylene (MDPE), and high-density polyethylene (HDPE), acid-modified polyethylene, acid-modified polypropylene, copolymer polypropylene, etc.

The thickness of the plastic laminate is not particularly limited, but is preferably 20 µm or more and 250 µm or less, more preferably 30 µm or more and 200 µm or less, and even more preferably 40 µm or more and 150 µm or less, taking into consideration the processability into a packaging container.

The plastic laminate is also preferably in a form including a gas barrier base material, for example, a plastic base material having an inorganic vapor deposition layer of aluminum, silica, alumina, etc.; or a plastic base material having an organic layer of an ethylene-vinyl alcohol copolymer, polyvinyl alcohol, etc.

In addition, preferred embodiments of the plastic laminate include a form including additives such as an antistatic agent, an antifogging agent, an ultraviolet protection agent, etc. (coated or kneaded), a form having an easily adhesive coating layer (for example, a layer containing polyvinyl alcohol and a derivative thereof), and a form in which the surface of the base material is corona-treated or low-temperature plasma-treated. The above-mentioned addition and processing are also carried out for the purpose of improving the wettability with printing ink and other coating agents, and for the purpose of imparting specific functionality to the film. For example, preventing the packaging material from fogging due to moisture is suitably used for the purpose of providing a packaging material with excellent visibility of the contents.

### <Production of packaging material (A)>

The method for producing the packaging material (A) is not particularly limited, and can be, for example, the methods described in Japanese Patent Application Laid-Open No. 2019-142037, Japanese Patent Application Laid-Open No. 2019-142039, Japanese Patent Application Laid-Open No. 2021-160270, etc. The printed layer described below may be formed, for example, by printing in advance on a base material before the production of the plastic laminate, or the printed layer may be formed after the plastic laminate is formed or the printed layer may be formed after the plastic laminate is processed into the form of a packaging bag.

### <Printed layer>

The printed layer is, for example, a layer on which an arbitrary print pattern is formed. Preferably, the printed layer is a layer intended for decoration, aesthetic appearance, display of contents, expiration date, manufacturer or seller, etc. The printed layer also includes a solid printed layer. In addition, in this embodiment, the printed layer can be released by immersing the printed layer in a release liquid that contains a surfactant. The printed layer can be formed by printing ink, and the printing ink preferably contains urethane resin and/or polyamide resin, and other resin.

The other resin preferably contains hard resin. The hard resin refers to resin other than urethane resin and polyamide resin that can act as binder resin soluble in an organic solvent. The hard resin preferably has a glass transition temperature of 40°C to 260°C, more preferably 50°C to 250°C, and even more preferably 60°C to 240°C. Examples of the hard resin include cellulose-based resin, vinyl chloride copolymer resin (vinyl chloride-vinyl acetate copolymer resin, vinyl chloride-acrylic copolymer resin, etc.), dimer acid-based resin, rosin-based resin (rosin-modified maleic acid resin, rosin ester resin, etc.), maleic acid-based resin, petroleum resin, terpene resin, ketone resin, dammar resin, copal resin, etc.

Among these, at least one resin selected from vinyl chloride copolymer resin and cellulose-based resin is preferable. The combined use of these types of hard resin improves the adhesion to the plastic laminate. Among these, the other resin is preferably vinyl chloride-vinyl acetate copolymer resin and/or cellulose-based resin, and is preferably contained in an amount of 0.1 to 6% by mass in terms of solid content based on the total mass of the printing ink, and more preferably 0.5 to 5% by mass. By using the above resin in combination, a printed layer that is excellent in both printability and releasability can be formed.

As the printing ink, for example, the printing ink described in Japanese Patent Application Laid-Open No. 2016-043600, Japanese Patent Application Laid-Open No. 2019-043085, etc. can be appropriately used. The acid value of the printed layer is preferably 70 mgKOH/g or less, and more preferably 50 mgKOH/g or less. Examples of suitable resin combinations include urethane resin/vinyl chloride copolymer resin, urethane resin/cellulose resin, and polyamide resin/cellulose resin. The combination of urethane resin/vinyl chloride copolymer resin is more preferably a combination of urethane resin/vinyl chloride-vinyl acetate copolymer resin.

The printed layer can be obtained by printing the printing ink onto the plastic laminate by various printing methods. The printing method is not particularly limited, and examples of suitable printing methods include a screen printing method, a gravure printing method, a flexographic printing method, an offset printing method, an inkjet printing method, etc., among which a gravure printing method is preferable.

### <Primer layer>

In order to further promote releasability, the layer of the printed layer that comes into contact with the plastic laminate may be a primer layer. The primer layer is also one embodiment of the printed layer. The primer layer is disposed in contact with the base material and serves to remove the printed layer from the base material by dissolution with a release liquid, peeling, or the like. The primer layer preferably contains water-dispersible resin and/or an acidic compound having an acidic group. The thickness of the primer layer is preferably in the range of 0.5 µm to 3.0 µm, more preferably 0.6 µm to 2.0 µm, and even more preferably 0.8 µm to 1.5 µm, and can be formed by using a known method.

### [Water-dispersible resin]

The water-dispersible resin may be any resin that can swell or dissolve in water and be released from the base material. The water may be heated to a temperature of about 25°C to 100°C. This allows the primer layer to be released in water (including warm water). The water-soluble resin described below refers to resin that exhibits water dispersibility regardless of the acidic group. Such resin can be selected from known resin, and examples thereof include water-soluble polyester resin, water-soluble polyamide resin, water-soluble polyimide resin, water-soluble acrylic resin, water-soluble polyurethane resin, water-soluble polyallylamine resin, water-soluble phenolic resin, water-soluble epoxy resin, water-soluble phenoxy resin, water-soluble urea resin, water-soluble melamine resin, polyvinyl alcohol resin, and modified products of these types of resin. These may be used alone or in combination of two or more.

### [Compound having an acidic group]

The compound having an acidic group may be resin having an acidic group, or a low molecular weight compound having an acidic group. This allows the primer layer to be released in a basic aqueous solution.

The resin having an acidic group is not particularly limited as long as the resin has an acidic group, except for the case of a low molecular weight compound having an acidic group described below. Examples of the acidic group include a carboxyl group, a phosphoric acid group, a sulfonic acid group, a sulfino group, etc., and may form a salt. Suitable examples of the resin having an acidic group include the following.

Examples of the resin include cellulose-based resin, urethane resin, acrylic resin, polyamide resin, a vinyl chloride/vinyl acetate copolymer, ketone resin, polyester resin, and (meth)acrylic resin, all of which have an acidic group. For example, rosin-modified resin having an acid value, such as maleic rosin and fumaric rosin, can be used. For example, radical copolymers such as styrene-(meth)acrylic resin, styrene-maleic acid (anhydride) resin, and terpene-maleic acid (anhydride) resin, which are obtained by copolymerizing polymerizable monomers having an acidic group such as polymerizable monomers having a carboxyl group, such as itaconic acid, maleic acid, fumaric acid, and cinnamic acid; polymerizable monomers which are acid anhydrides, such as itaconic anhydride and maleic anhydride; polymerizable monomers having a sulfonic acid group, such as sulfonated styrene; and polymerizable monomers having a sulfonamide group, such as vinylbenzenesulfonamide, and acid-modified polyolefin resin can be used. These may be used alone or in combination of two or more.

The low molecular weight compound having an acidic group refers to a compound that does not have a molecular weight distribution and has a molecular weight of 1,000 or less. Examples of such a compound include saturated fatty acids such as lauric acid, myristic acid, palmitic acid, margaric acid, and stearic acid; unsaturated fatty acids such as oleic acid, linoleic acid, linolenic acid, arachidonic acid, eicosapentaenoic acid, docosahexaenoic acid, and sorbic acid; hydroxy acids such as lactic acid, malic acid, and citric acid; aromatic carboxylic acids such as benzoic acid, phthalic acid, isophthalic acid, terephthalic acid, salicylic acid, gallic acid, mellitic acid, and cinnamic acid; dicarboxylic acids such as oxalic acid, malonic acid, succinic acid, glutaric acid, adipic acid, fumaric acid, and maleic acid; tricarboxylic acids such as aconitic acid; oxocarboxylic acids such as pyruvic acid and oxaloacetic acid; carboxylic acid derivatives such as amino acid and nitrocarboxylic acid; and acid anhydrides such as trimellitic anhydride and pyromellitic anhydride. The low molecular weight compound having an acidic group can be used in combination with the above-mentioned resin having an acidic group or known resin constituting a known primer layer to form a primer layer.

From the viewpoint of recoating suitability, the primer layer preferably includes a compound having an acidic group. In addition, from the viewpoint of printability, the primer layer preferably includes urethane resin having an acidic group, acrylic resin having an acidic group, and rosin-modified resin.

### (Urethane resin having an acidic group)

The urethane resin having an acidic group is not particularly limited, and for example, the urethane resin described in Japanese Patent Application Laid-Open No. 2020-90627, Japanese Patent Application Laid-Open No. 2021-80431, etc. can be appropriately used. It is possible to impart an acid value derived from a carboxyl group to the urethane resin, and improve the releasability.

The acid value of the urethane resin is preferably 15 mgKOH/g or more, more preferably 15 to 70 mgKOH/g, and even more preferably 20 to 50 mgKOH/g. When the acid value is 15 mgKOH/g or more, the releasability brought by the release liquid is improved, and when the acid value is 70 mgKOH/g or less, the base material adhesion and the retort resistance are improved, which is preferable.

The hydroxyl value of the urethane resin is preferably 1 to 35 mgKOH/g, and more preferably 10 to 30 mgKOH/g. When the hydroxyl value is 1 mgKOH/g or more, the releasability brought by the release liquid is improved, and when the hydroxyl value is 35 mgKOH/g or less, the base material adhesion is improved, which is preferable.

The weight average molecular weight of the urethane resin having an acidic group is preferably 10,000 to 100,000, more preferably 15,000 to 70,000, and even more preferably 15,000 to 50,000. The molecular weight distribution (Mw/Mn) of the urethane resin is preferably 6 or less. Mw represents the weight average molecular weight, and Mn represents the number average molecular weight.

When the molecular weight distribution is 6 or less, the releasability and drying property of the primer composition are excellent. Furthermore, the smaller the molecular weight distribution, that is, the sharper the molecular weight distribution, the more uniformly the dissolution and peeling action of the release liquid occurs, and the releasability of the polyolefin base material is improved. The molecular weight distribution is more preferably 5 or less, and even more preferably 4 or less. In addition, the molecular weight distribution is preferably 1.5 or more, and more preferably 1.2 or more. In the present invention, Mw, Mn, and the molecular weight distribution (Mw/Mn) are polystyrene equivalent values determined by gel permeation chromatography (GPC).

The urethane resin having an acidic group may have an amine value. In the case where the urethane resin has an amine value, the amine value is preferably 0.1 to 20 mgKOH/g, and more preferably 1 to 10 mgKOH/g. When the amine value falls within the above range, the base material adhesion is excellent.

The number of urethane bonds in the polyurethane resin having an acidic group is preferably 1 to 3 mmol/g, and more preferably 1.5 to 2 mmol/g. In addition, the number of urea bonds is preferably 0 to 3 mmol/g, and more preferably 0.2 to 1 mmol/g. Further, the total number of urethane bonds and urea bonds is preferably 1 to 6 mmol/g, and more preferably 1.7 to 3 mmol/g. By setting the number of urethane bonds and the number of urea bonds within the corresponding ranges, the releasability and base material adhesion are improved.

### (Acrylic resin having an acidic group)

Examples of the acrylic resin having an acidic group include polymers obtained by polymerizing a monomer containing a (meth)acrylic monomer having an acidic group, such as (meth)acrylic acid and maleic acid; and resin obtained by polymerizing a monomer containing a (meth)acrylic monomer having a hydroxyl group or a glycidyl group, and then modifying the functional group to introduce a carboxyl group (for example, maleic anhydride modified resin). The acid value of the acrylic resin having an acidic group is preferably 50 mgKOH/g or more, and more preferably 100 mgKOH/g or more.

### (Rosin-modified resin)

The rosin-modified resin is resin prepared using rosin as one of the raw materials. Rosin contains a mixture of resin acids such as abietic acid, palustric acid, isopimaric acid, and levopimaric acid. These resin acids contain hydrophilic and chemically active carboxyl groups, some of which may include conjugated double bonds. Therefore, various types of rosin-modified resin can be prepared. For example, various types of rosin-modified resin have been prepared by combining polyhydric alcohols or polybasic acids and subjecting these to condensation polymerization, by adding resol which is a phenol condensate to the benzene ring contained in the rosin skeleton, or by subjecting dienophiles such as maleic anhydride or maleic acid to a Diels-Alder reaction to add a maleic acid or maleic anhydride skeleton. Various types of such rosin-modified resin are commercially available, and it is also possible to obtain and use such resin.

Examples of the rosin-modified resin include maleated rosin, fumarated rosin, rosin-modified maleic acid resin, rosin-modified fumaric acid resin, rosin-modified phenolic resin, rosin-modified alkyd resin, and rosin-modified polyester resin. In the present invention, any rosin-modified resin may be used, but among these, it is preferable to use rosin-modified resin containing in the structure a moiety derived from at least one selected from the group consisting of maleic acid, maleic anhydride, fumaric acid, and fumaric anhydride.

The above-mentioned resin "containing in the structure a moiety derived from at least one selected from the group consisting of maleic acid, maleic anhydride, fumaric acid, and fumaric anhydride" means resin prepared using at least one selected from the group consisting of maleic acid, maleic anhydride, fumaric acid, and fumaric anhydride as part of the raw material. For example, this refers to rosin-modified maleic acid resin and rosin-modified fumaric acid resin obtained by condensation polymerization of maleic acid or fumaric acid as part of a polybasic acid, or maleated rosin and fumarated rosin having a structure in which maleic acid, maleic anhydride, fumaric acid, or fumaric anhydride is added as a dienophile by a Diels-Alder reaction, as well as resin obtained by further polymerizing other chemical species using functional groups contained in these. The acid value of the rosin-modified resin is preferably 10 to 400 mgKOH/g, and more preferably 100 to 300 mgKOH/g.

### <Method for producing recycled plastic>

The method for producing recycled plastic of this embodiment includes at least obtaining a laminate (B) (step 1), and melting and kneading the laminate (B) (step 2).

### <Step 1 of obtaining laminate (B)>

Step 1 of obtaining the laminate (B) includes a step of immersing the packaging material (A) in a release liquid including a surfactant, and recovering the laminate (B) from which the printed layer has been released. The packaging material (A) is preferably in a state where the printed layer is exposed on the cross section when the packaging material (A) is immersed in the release liquid. Therefore, it is more preferable to include a step of fragmenting the packaging material (A) by cutting or crushing. In addition, it is preferable to further include a step of washing the laminate (B) with water, and dehydrating and drying the laminate (B) obtained by releasing the printed layer from the packaging material (A) and recovering. In the present invention, the term "release" refers to the printed layer being released from the plastic laminate by the release liquid, and includes both cases where (1) the release layer dissolves and the plastic laminate is released, and (2) even if the release layer does not dissolve, the release layer peels off due to neutralization and swelling, and the plastic laminate is released.

### <Laminate (B)>

In this embodiment, the laminate (B) means a form in which at least a part of the printed layer has been removed from the packaging material (A). Specifically, the packaging material (A) preferably has 85% by mass or more of the printed layer on the packaging material (A) released therefrom, based on 100% by mass, more preferably 90% by mass or more, even more preferably 95% by mass or more, and particularly preferably 99% by mass or more. By removing 85% by mass or more of the printed layer, it is possible to easily obtain high-quality recycled plastic with little coloring or few foreign matters.

Furthermore, the laminate (B) may contain a halogen element due to the printed layer, the adhesive agent layer, or the like. The laminate (B) containing a halogen element generates halogen gas or hydrogen chloride, which is an acidic gas, during the production of pellets, which may damage equipment or pose a risk to human health. Furthermore, in the case where air bubbles are generated during pellet production, when the produced pellets are used to produce a molded product, unevenness is likely to occur on the surface, which may deteriorate the surface condition of the molded product. Therefore, the chlorine content of the laminate (B) is preferably 0.4% by mass or less, more preferably 0.2% by mass or less, and even more preferably 0.1% by mass or less, based on the total mass of the laminate (B).

The chlorine content in the laminate (B) can be measured using known methods such as ion chromatography (IC) or an inductively coupled plasma mass spectrometer (ICP-MS).

### <Release liquid>

The release liquid may contain water and a surfactant for the printed layer to release. The release liquid can be appropriately selected taking into consideration the ease of release of the printed layer, which will be described later. Examples of such a release liquid include water, a basic aqueous solution, and an acidic aqueous solution, each of which includes a surfactant. From the viewpoint of the environment and maintaining the properties of the recycled plastic material using the recovered laminate (B), an aqueous release liquid is preferable. These release liquids may be heated.

From the viewpoint of releasability of the printed layer, the aqueous release liquid is preferably a basic aqueous solution including a basic compound. The release liquid may also contain components other than the surfactant as long as the effects of the present invention are not impaired. Other components include an antifoaming agent, etc., and the type and amount thereof may be appropriately selected for use according to the required characteristics.

The temperature of the release liquid when the packaging material (A) is immersed therein is preferably in the range of 25°C to 120°C, more preferably 30°C to 120°C, and particularly preferably 30°C to 80°C. The immersion time in the release liquid is preferably in the range of 1 minute to 24 hours, more preferably 1 minute to 12 hours, and preferably 1 minute to 6 hours. The amount of the release liquid used is preferably 5 to 100,000 times, and more preferably 10 to 10,000 times, relative to the mass of the packaging material (A). In order to improve the release efficiency, the release liquid is preferably stirred or circulated. The rotation speed is preferably 80 to 5000 rpm, and more preferably 80 to 4000 rpm.

### <Surfactant>

In this embodiment, the release liquid includes a surfactant. From the viewpoint of releasability of the printed layer, the surfactant that can be suitably used is an anionic surfactant, a cationic surfactant, an amphoteric surfactant, and a nonionic surfactant. In one embodiment, the surfactant more preferably includes at least one selected from the group consisting of a nonionic surfactant, an amphoteric surfactant, and an anionic surfactant, and particularly preferably a nonionic surfactant.

The surfactant mainly serves to improve the releasability of the printed layer. The reason is considered to be that the action of the surfactant makes it easier for the release liquid to permeate into the printed layer and promote the releasability. It is also considered that the surfactant is adsorbed onto the surface of the released components and the base material, thereby preventing the finely dispersed printed layer or the like from re-adhering. Furthermore, if the amount of the packaging material (A) relative to the release liquid is increased, the plastic laminate tends to curl with the released ink particles caught therein, making it difficult to cleanly remove the ink particles caught in the curl. However, as the release liquid includes a surfactant, the surfactant is adsorbed to the surface of the plastic laminate, which suppresses curling. As a result, the releasability is improved and re-adhesion can be suppressed.

The HLB value of a surfactant can be used as an index value relating to the affinity of the surfactant for water and oil. The HLB value is an index value relating to the affinity of a surfactant for water and oil, and is divided into two equal parts: 0 for a substance that has no hydrophilic groups and 20 for a substance that has only hydrophilic groups. The concept of HLB was proposed in 1949 by William Griffin of the Atlas Powder Company. Several methods have been proposed for determining HLB by calculation. For example, there are the Griffin method, the Atlas method, the Davies method, and the Kawakami method. The nonionic surfactant used in the present invention adopted the HLB value calculated using the Griffin method. For the ionic surfactant, the HLB value calculated using the Davies method was adopted.

In this embodiment, the surfactant has an HLB value of 3 or more, and preferably 7 or more. As the HLB value is 7 or more, excellent deinking properties and re-adhesion properties are exhibited as described above. The HLB value of the nonionic surfactant is preferably 8 or more, and more preferably 10 or more. Further, the HLB value of the surfactant is preferably 20 or less, more preferably 19 or less, and even more preferably 17 or less. An HLB value of 20 or less is preferable for excellent foaming suppression.

The surfactant may be used alone or in combination of two or more. The content of the surfactant of the release liquid is preferably in the range of 0.1 to 10% by mass, and more preferably in the range of 0.3 to 5% by mass, based on the mass of the release liquid. A content of 0.1% by mass or more is preferable for excellent deinking properties and re-adhesion properties, while a content of 10% by mass or less is preferable from the viewpoint of foaming suppression.

### [Nonionic surfactant]

The nonionic surfactant is not particularly limited, but is preferably an alkylene oxide adduct in which alkylene oxide (hereinafter, also referred to as AO) is added. The surfactant is more preferably a compound obtained by adding alkylene oxide to alcohols having active hydrogen, a compound obtained by adding alkylene oxide to amines, or a compound obtained by adding alkylene oxide to fatty acids. The above-mentioned addition may be either a random addition or a block addition. Additionally, the alkylene oxide preferably has 2 to 4 carbon atoms. The nonionic surfactant is preferably an alcohol-based nonionic surfactant in which alkylene oxide having 2 to 4 carbon atoms is added to alcohols.

### (Alcohol-based nonionic surfactant)

Examples of the alcohol-based nonionic surfactant include an alkylene oxide adduct of primary or secondary alcohol having a total of 8 to 24 carbon atoms, and an alkylene oxide adduct of alkylphenol having a total of 8 to 12 carbon atoms. The primary or secondary alcohol having a total of 8 to 24 carbon atoms may be either saturated or unsaturated.

Examples of the primary or secondary alcohol having a total of 8 to 24 carbon atoms include lauryl alcohol, stearyl alcohol, oleyl alcohol, dodecyl alcohol, arachidyl alcohol, behenyl alcohol, lignoceryl alcohol, myristyl alcohol, etc. In addition, examples of the alkylene oxide to be added to the alcohols include ethylene oxide, propylene oxide, and butylene oxide, and it is preferable to include at least ethylene oxide. The number of moles of alkylene oxide added is preferably 1 to 100 moles, and more preferably 2 to 50 moles, per mole of the alcohols or alkylphenol. The above range is preferable for particularly excellent releasability.

### (Fatty acid-based nonionic surfactant)

The fatty acid-based nonionic surfactant is not particularly limited in structure, and examples thereof include an alkylene oxide adduct of higher fatty acid having a total of 10 to 24 carbon atoms, oil and fat composed of ester of the above-mentioned saturated or unsaturated higher fatty acid having a total of 10 to 24 carbon atoms and glycerin, and further an alkylene oxide adduct of a mixture of the above-mentioned oil and fat and polyhydric alcohol of 2 to 10 valence. The higher fatty acid having a total of 10 to 24 carbon atoms may be either saturated or unsaturated.

Examples of the higher fatty acid having a total of 10 to 24 carbon atoms include saturated higher fatty acids such as lauric acid, myristic acid, palmitic acid, stearic acid, arachic acid, and behenic acid; and unsaturated higher fatty acids such as palmitoleic acid, oleic acid, elaidic acid, linoleic acid, linolenic acid, erucic acid, and ricinoleic acid. Examples of the polyhydric alcohol of 2 to 10 valence include ethylene glycol, propylene glycol, glycerin, polyglycerin, sorbitol, sorbitan, sucrose, etc. The type and the number of moles of alkylene oxide added are the same as those described above in the section of [Alcohol-based nonionic surfactant].

### (Amine-based nonionic surfactant)

Examples of the amine-based nonionic surfactant include an AO adduct of saturated or unsaturated primary or secondary amine having a total of 8 to 36 carbon atoms. Examples of the amine include 2-ethylhexylamine, di-2-ethylhexylamine, laurylamine, dilaurylamine, tetradecylamine, ditetradecylamine, hexadecylamine, dihexadecylamine, stearylamine, distearylamine, oleylamine, dioleylamine, etc. The type and the number of moles of AO added are the same as above.

### [Anionic surfactant]

The anionic surfactant is preferably non-soap-based, and examples thereof include a sulfonic acid-based anionic surfactant, a sulfate ester-based anionic surfactant, a carboxylic acid-based anionic surfactant, and a phosphate ester-based anionic surfactant.

### (Sulfonic acid-based anionic surfactant)

Examples of the sulfonic acid-based anionic surfactant include alkylsulfonic acid, alkylbenzenesulfonic acid, alkylnaphthalenesulfonic acid, alkyldiphenyletherdisulfonic acid, alkylmethyltaurine, sulfosuccinic acid diester, an alkyleneoxide adduct of sulfonic acid, and salts of these. Specific examples that can be used include hexanesulfonic acid, octanesulfonic acid, decanesulfonic acid, dodecanesulfonic acid, toluenesulfonic acid, cumenesulfonic acid, octylbenzenesulfonic acid, dodecylbenzenesulfonic acid, dinitrobenzenesulfonic acid, lauryldodecylphenyletherdisulfonic acid, etc.

### (Sulfate ester-based anionic surfactant)

Examples of the sulfate ester-based anionic surfactant include sulfate ester (alkyl ether sulfate ester), an alkylene oxide adduct of sulfate ester, and salts of these. Specific examples that can be used include lauryl sulfate, myristyl sulfate, polyoxyethylene lauryl ether sulfate, etc.

### (Carboxylic acid-based anionic surfactant)

Examples of the carboxylic acid-based anionic surfactant include alkyl carboxylic acid, alkyl benzene carboxylic acid, an alkylene oxide adduct of carboxylic acid, and salts of these. Specific examples that can be used include lauric acid, myristic acid, palmitic acid, stearic acid, polyoxyethylene lauryl ether acetic acid, polyoxyethylene tridecyl ether acetic acid, etc.

### (Phosphate ester-based anionic surfactant)

Examples of the phosphate ester-based anionic surfactant include phosphate ester (alkyl ether phosphate ester), an alkylene oxide adduct of phosphate ester, and salts of these. Specific examples that can be used include octyl phosphate ester, lauryl phosphate ester, tridecyl phosphate ester, myristyl phosphate ester, cetyl phosphate ester, stearyl phosphate ester, polyoxyethylene octyl ether phosphate ester, polyoxyethylene lauryl ether phosphate ester, etc.

The anionic surfactant preferably has an alkyl group having 2 to 24 carbon atoms or an alkenyl group having 2 to 24 carbon atoms, and more preferably has an alkyl group having 8 to 18 carbon atoms. The alkyl group or the alkenyl group may be linear or branched. Additionally, in the case where the anionic surfactant is an alkylene oxide adduct, examples of the alkylene oxide include ethylene oxide, propylene oxide, and butylene oxide, among which ethylene oxide is preferable. The number of moles of alkylene oxide added is preferably 1 to 12 moles, and more preferably 1 to 8 moles, per mole of the alcohols or alkylphenol. The above range is preferable for particularly excellent releasability.

Examples of the salt constituting the above-described anionic surfactant include metal salts such as sodium, potassium, magnesium, and calcium. These salts may be used alone or in combination of two or more. Among these, from the viewpoint of releasability and re-adhesion properties, the anionic surfactant is preferably sulfonate type and phosphate type, and is more preferably alkyl sulfonate, polyoxyalkylene alkyl ether sulfonate, polyoxyalkylene alkyl ether phosphate, etc.

### [Cationic surfactant]

Examples of the cationic surfactant include alkylamine salts and quaternary ammonium salts. Specifically, stearylamine acetate, trimethyl coconut ammonium chloride, trimethyl beef tallow ammonium chloride, dimethyldioleyl ammonium chloride, methyl oleyl diethanol chloride, tetramethyl ammonium chloride, lauryl pyridinium chloride, lauryl pyridinium bromide, lauryl pyridinium disulfate, cetyl pyridinium bromide, 4-alkylmercaptopyridine, poly(vinylpyridine)-dodecyl bromide, dodecylbenzyl triethyl ammonium chloride, etc. can be used.

### [Amphoteric surfactant]

Examples of the amphoteric surfactant include lauryl dimethylaminoacetate betaine, 2-alkyl-N-carboxymethyl-N-hydroxyethyl imidazolinium betaine, coconut oil fatty acid amidopropyl dimethylaminoacetate betaine, polyoctyl polyaminoethyl glycine, and imidazoline derivatives.

These surfactants may be used alone or in combination of two or more in the release liquid. The content of the surfactant of the release liquid is preferably in the range of 0.1 to 10% by mass, and more preferably in the range of 0.3 to 5% by mass, based on the total mass of the release liquid, in terms of the total surfactant content. A content of 0.1% by mass or more is preferable for excellent deinking properties and re-adhesion properties, while a content of 10% by mass or less is preferable from the viewpoint of foaming suppression.

### [Antifoaming agent]

An antifoaming agent generally has extremely high lipophilicity, and the antifoaming agent in the present invention refers to one having an HLB value in the range of 1 or more and less than 3. By using the antifoaming agent in combination with the above-mentioned surfactant, good antifoaming properties are exhibited without reducing the releasability and re-adhesion properties, and foaming caused by the surfactant can be suppressed. Examples of the antifoaming agent include a silicone-based compound and a non-silicone-based compound.

### (Silicone-based compound)

Examples of the silicone-based compound include emulsion type, self-emulsifying type, oil type, oil compound type, and solvent type.

The emulsion type is a silicone-based antifoaming agent in which a silicone oil compound is emulsified with an activator to form an O/W type emulsion. Examples thereof include "KM-89" and "KM-98" manufactured by Shin-Etsu Chemical Co., Ltd., "FC2913" and "SILFOAMSE47" manufactured by Wacker Asahi Kasei Silicone Co., Ltd., and "BYK-015" and "BYK-1640" manufactured by BYK Japan Co., Ltd.

The self-emulsifying type is a silicone-based antifoaming agent that is 100% active ingredient and becomes an emulsion state when diluted and mixed with water. Examples thereof include "KS-540" and "X-50-1176" manufactured by Shin-Etsu Chemical Co., Ltd., and "SILFOAMSD670" and "SILFOAMSD850" manufactured by Wacker Asahi Kasei Silicone Co., Ltd.

The oil type is a 100% silicone oil antifoaming agent that does not contain solvent or additive, and examples thereof include "KM-89" and "KM-98" manufactured by Shin-Etsu Chemical Co., Ltd., "AK350" and "AK12500" manufactured by Wacker Asahi Kasei Silicone Co., Ltd., and "BYK-1770" manufactured by BYK Japan Co., Ltd.

The oil compound type is a silicone-based antifoaming agent in which silica particles are blended with silicone oil. Examples thereof include "KM-89" and "KM-98" manufactured by Shin-Etsu Chemical Co., Ltd., "SILFOAMSC370" and "PULPSIL22274VP" manufactured by Wacker Asahi Kasei Silicone Co., Ltd., and "BYK-017" and "BYK-018" manufactured by BYK Japan Co., Ltd.

The solvent type is a silicone-based antifoaming agent in which silicone oil is dissolved in a solvent, and examples thereof include "KM-89" and "KM-98" manufactured by Shin-Etsu Chemical Co., Ltd., and "BYK-019" and "BYK-025" manufactured by BYK Japan Co., Ltd.

### (Non-silicone-based compound)

Examples of the non-silicone-based compound include a fatty acid ester-based compound, a urea resin-based compound, a paraffin-based compound, a polyoxyalkylene glycol-based compound, an acrylic ester copolymer, an ester-based polymer, an ether-based polymer, an amide-based polymer, emulsion type of mineral oil, a polysiloxane adduct, a fluorine-based compound, a vinyl-based polymer, acetylene alcohol, an acrylic-based polymer, a special vinyl-based polymer, ethylene glycol, and higher alcohol (such as octyl alcohol and cyclohexanol).

The antifoaming agent may be used alone or in combination of two or more. The content of the antifoaming agent of the release liquid is preferably in the range of 0.01 to 5% by mass, and more preferably in the range of 0.03 to 3% by mass, based on the total mass of the release liquid. When the content is 0.01% by mass or more, the foaming suppression is excellent, and when the content is 5% by mass or less, the deinking properties and re-adhesion properties are excellent. From the viewpoint of achieving good alkali resistance and being less likely to reduce deinking properties and re-adhesion properties when combined with the above-mentioned surfactant having an HLB of 7 or more, the antifoaming agent preferably includes at least one selected from the group consisting of an emulsion type silicone-based compound, a self-emulsifying type silicone-based compound, and a non-silicone-based compound.

### <Basic compound>

In this embodiment, as described above, the release liquid is preferably a basic aqueous solution including a basic compound. The basic compound is not particularly limited, and for example, sodium hydroxide (NaOH), potassium hydroxide (KOH), calcium hydroxide (Ca(OH)₂), ammonia, barium hydroxide (Ba(OH)₂), and sodium carbonate (Na₂CO₃) are preferably used. The basic compound is more preferably at least one selected from the group consisting of sodium hydroxide and potassium hydroxide. The content of the basic compound in the basic aqueous solution is preferably in the range of 0.5 to 20% by mass, more preferably 1 to 15% by mass, and even more preferably 3 to 15% by mass, based on the mass of the basic aqueous solution. Within the above range, the basic aqueous solution can retain sufficient basicity to dissolve or swell the printed layer and release the printed layer, thereby recovering the plastic laminate.

### <Step of fragmenting by cutting or crushing>

In one embodiment, it is preferable to include a step of fragmenting the packaging material (A) by cutting or crushing. By fragmenting the packaging material (A) by cutting or crushing, the printed layer can be released from the packaging material (A) in a shorter time. More specifically, the release liquid permeates the surface and edge portions of the packaging material (A), comes into contact with the printed layer, and dissolves or swells the printed layer, thereby releasing the printed layer. Therefore, it is preferable that the packaging material (A) is fragmented by cutting or crushing, and is in a state in which the printed layer is exposed on the cross section when the packaging material (A) is immersed in the release liquid.

In order to fragment the shape of the packaging material (A), cutting or crushing is effective. The cutting or crushing method is not particularly limited, and examples thereof include methods using a jaw crusher, an impact crusher, a cutter mill, a stamp mill, a ring mill, a roller mill, a jet mill, or a hammer mill.

The size of the fragments of the packaging material (A) preferably has a side length of 5 mm to 60 mm, more preferably 10 mm to 50 mm, and even more preferably 20 mm to 40 mm. When the size is 5 mm or more, the stretching of the sealant due to stress during cutting or crushing can be suppressed. The stretching of the sealant reduces the exposure of the printed layer on the cross section of the packaging material (A), which may reduce the immersion efficiency during release or impair the releasability. If the crushed size is 60 mm or less, the exposed area of the printed layer of the packaging material (A) increases, which promotes contact and permeation of the release liquid and shortens the time for the releasing step.

### <Step of washing with water, dehydrating, and drying>

In one embodiment, it is preferable to include a step of washing the adhering release liquid with water from the laminate (B) recovered by releasing the printed layer from the packaging material (A), and dehydrating and drying the laminate (B). The water-washing method may be batch type or continuous type, and water, a detergent, a neutralizing agent, or an alkaline aqueous solution may be used in the method. The dehydrating method is preferably a centrifugal dehydrating method, and the drying method is preferably a hot air drying method. The purpose of adjusting the moisture content in the laminate (B) is to prevent foaming of the recycled plastic obtained by the extrusion device. In the case where air bubbles are generated during pellet production, when the produced pellets are used to produce a molded product, unevenness is likely to occur on the surface, which may deteriorate the surface condition of the molded product. Therefore, the content of moisture (moisture content) in the laminate (B) is preferably 3% by mass or less, more preferably 2% by mass or less, even more preferably 1% by mass or less, and particularly preferably 0.5% by mass or less.

### <Step 2 of melting and kneading>

The laminate (B) obtained in step 1 for obtaining the laminate (B) is melted and kneaded using an extrusion device provided with a screw and a discharge section.

### [Extrusion device provided with a screw and a discharge section]

The extrusion device used in this embodiment includes a screw and a discharge section. The extrusion device may be a commonly used device that is capable of melting and molding thermoplastic resin or the like. For example, a known extrusion device as described in Japanese Patent Application Laid-Open No. 2017-148997 can be used. Specifically, the extrusion device has a supply port for supplying a material, a melting/kneading section for melting and kneading the material such as thermoplastic resin supplied from the supply port, and a discharge section for discharging the thermoplastic resin melted and kneaded by the melting/kneading section. The melting/kneading section is provided with a screw, and the material is melted and kneaded by shear heat generated by the rotation of the screw, a heat source such as an electric heater, and the material itself. The melted material passes through a mesh of the discharge section and is discharged. Examples of the extrusion device include a twin-screw extruder, a single-screw extruder, and a rotor type twin-screw kneader.

More specifically, in an embodiment of the present invention, it is preferable to obtain recycled plastic by an embodiment that includes a step of supplying the laminate (B) from the supply port, a step of melting and kneading the laminate (B) supplied from the supply port into a resin composition (b), a step of discharging the resin composition (b) melted and kneaded by the melting/kneading section, and a step of cooling the resin composition (b) discharged from the discharge section to 40°C or less.

### [Step of supplying from supply port]

The laminate (B) obtained in step 1 for obtaining the laminate (B) is supplied from the supply port of the extrusion device. If necessary, various additives may be added to the laminate (B) before processing the laminate (B) in the extrusion device. The laminate (B) and optional components can be mixed using a Henschel mixer, a tumbler, a disperser, or the like.

### (Additive)

In this embodiment, the recycled plastic may contain known additives to the extent that the effects of the present invention are not impaired. Examples of the additives include at least one antioxidant selected from the group consisting of phenol-based and phosphorus-based antioxidants; at least one lubricant selected from the group consisting of fatty acid amide-based, alkylene fatty acid amide-based, metal soap-based, and ester-based lubricants; hindered amine-based weather stabilizers; waxes having an acid value of 5 mgKOH/g or less; and at least one antistatic agent selected from the group consisting of fatty acid sulfonates and fatty acid ester-based antistatic agents.

### [Step of forming resin composition (b)]

The laminate (B) supplied from the supply port is heated, melted, and kneaded in the melting/kneading section of the extrusion device to form the resin composition (b). The temperature range in this step needs to take into consideration the glass transition temperature and melting temperature of the laminate (B), the shape of the recycled plastic, and the pressure applied in the molding step. The melting temperature is preferably 140°C to 250°C, more preferably 160°C to 240°C, and even more preferably 170°C to 230°C. In the case where the laminate (B) is heated, melted, and kneaded in this temperature range, uniform recycled plastic can be easily obtained.

In one embodiment, in the case where the laminate (B) has a base material and a sealant, the laminate (B) is more preferably in the following form.
(1) Both the base material and the sealant include polypropylene-based resin. In this case, the heat-melting temperature of the laminate (A) is preferably 150°C to 250°C, more preferably 180°C to 240°C, and even more preferably 190°C to 230°C.
(2) Both the base material and the sealant include polyethylene-based resin. In this case, the heat-melting temperature of the laminate (A) is preferably 140°C to 230°C, more preferably 160°C to 220°C, and even more preferably 170°C to 210°C.

Furthermore, the rotation speed of the screw during kneading is preferably 50 to 1000 RPM. The rotation speed is more preferably 80 to 800 RPM, and even more preferably 100 to 500 RPM. In the case where the rotation speed is within the above range, the generation of insoluble matter and scorching in the resin composition (b) and further in the recycled plastic can be suppressed, and recycled plastic having high mechanical characteristics can be easily obtained. As a result, good moldability can be maintained.

### [Step of discharging resin composition (b)]

The resin composition (b) obtained by heating, melting, and kneading in the melting/kneading section of the extrusion device is discharged from the tip discharge section of the extrusion device. In the step of discharging the resin composition (b), the pressure at the tip discharge section of the extrusion device is preferably 15 MPa or less, more preferably 10 MPa, and even more preferably 8 MPa. The pressure reduces the amount of impurities contained, and makes it possible to continuously produce recycled plastic with stable purity.

At the discharge section of the extrusion device, it is preferable to use a screen mesh (metal net) to remove foreign matters from the molded pellets. The type of the screen mesh (metal net) is not particularly limited, and examples thereof include woven types such as plain weave, twill weave, plain tatami weave, and twill tatami weave, as well as punched metal types, but plain weave is preferable. Considering the pressure of the discharge section and clogging, the size of the screen mesh is preferably 40 mesh or more, more preferably 80 mesh or more, and even more preferably 120 mesh or more.

### [Step of cooling]

Methods for cooling the discharged resin composition (b) include, for example, air cooling, wind cooling, and water cooling. The discharged resin composition (b) is cooled to preferably 20°C to 80°C, and more preferably 30°C to 60°C. In addition, the discharged resin composition (b) is preferably shredded before and/or after cooling. Examples of the shredding method include a hot cut method and a strand cut method, but the method is not particularly limited to these. The shape of the recycled plastic is not particularly limited, and examples thereof include rod-like, granular, cubic, rectangular, and irregular shapes.

### <Molded product>

The recycled plastic obtained by the above-mentioned production method can be used, for example, as a molding material. That is, a molded product can be obtained by heating and molding the recycled plastic (molding material). The heat-molding method is not particularly limited, and examples thereof include injection molding, extrusion molding, blow molding, and compression molding. In the molding material produced using the recycled plastic of this embodiment, the printed layer is released, and further, re-adhesion of the released components is suppressed. Therefore, the molding material has high quality, and can be used in various fields, such as home appliances, stationery, automobile parts, toys, and sporting goods, as well as medical, architectural, and construction materials.

### Example

The present invention will be described in detail below with reference to examples, but the present invention is not limited to these examples. In the present invention, parts and % represent parts by mass and % by mass unless otherwise specified.

### <Molecular weight and molecular weight distribution>

The weight average molecular weight (Mw), the number average molecular weight (Mn), and the molecular weight distribution (Mw/Mn) were measured by GPC (gel permeation chromatography) and calculated as equivalent molecular weights using polystyrene as a standard substance. The measurement conditions are as follows.

### (Measurement conditions)

GPC device: Shodex GPC-104 manufactured by Showa Denko
Column: the following columns were used in series connection
· 2 units of Shodex LF-404 manufactured by Showa Denko
· Shodex LF-G manufactured by Showa Denko
Detector: RI (differential refractometer)
Measurement conditions: column temperature 40°C
Eluent: tetrahydrofuran
Flow rate: 0.3 mL/min

### <Acid value, hydroxyl value>

The acid value and the hydroxyl value were measured according to the method described in JIS K0070 (1992).

### <Chlorine content>

The chlorine content was measured in accordance with JIS K0127 (2013). That is, the pulverized product of the dried laminate (B) was pretreated by a combustion method, and the content of chlorine of the obtained sample was quantitatively determined by ion chromatography to obtain the chlorine content.

### <Method for measuring moisture content>

The moisture content of the pulverized product of the dried laminate (B) was measured by a method in accordance with JIS K0068 (2001). The measuring equipment and reagent are shown below.

### (Measuring equipment)

Karl Fischer moisture titrator MKC-710D (manufactured by Kyoto Electronics Manufacturing Co., Ltd.)
Moisture vaporizer ADP-611 (manufactured by Kyoto Electronics Manufacturing Co., Ltd.)
(Karl Fischer reagent)
Chem-Aqua Water Standard 1 (Kyoto Electronics Manufacturing Co., Ltd.)

### <Measurement of total light transmittance>

The total light transmittance was measured using haze-gard plus (Gardner Co., Ltd.) in accordance with JIS K7361.

### <Production of primer>

### [Synthesis Example 1-1] (Polyurethane resin P1)

In a reactor equipped with a reflux condenser, a dropping funnel, a gas inlet tube, a stirrer, and a thermometer, while introducing nitrogen gas, 135.7 parts of PPA (polyester polyol composed of a polycondensate of propylene glycol and adipic acid and having a number average molecular weight of 2,000), 13.6 parts of PPG (polyether polyol composed of polypropylene glycol and having a number average molecular weight of 2,000), 28.3 parts of DMPA (2,2-dimethylolpropanoic acid), 105.7 parts of IPDI (isophorone diisocyanate), and 200 parts of NPAC (normal propyl acetate) were charged and reacted at 90°C for 5 hours to obtain a urethane prepolymer solution having an isocyanate group at the end.

Next, a mixture of 16.7 parts of AEA (2-(2-aminoethylamino)ethanol) and 350 parts of IPA (isopropyl alcohol) was added dropwise at room temperature over 60 minutes, and then reacted at 70°C for 3 hours to obtain a polyurethane resin solution.

NPAC was added to the obtained polyurethane resin solution to adjust the solid content, thereby obtaining a solution of polyurethane resin P1 having a solid content concentration of 30%, a weight average molecular weight of 30,000, Mw/Mn=3.0, and an acid value of 39.3 mgKOH/g.

### [Synthesis Example 1-2] (Polyurethane resin P2)

A solution of polyurethane resin P2 was obtained in the same manner as in Synthesis Example 1-1, except that the raw materials and the amounts charged were as shown in Table 1.

### [Synthesis Example 1-3] (Polyurethane resin P3)

In a reactor equipped with a reflux condenser, a dropping funnel, a gas inlet tube, a stirrer, and a thermometer, while introducing nitrogen gas, 108.6 parts of PPA, 40.7 parts of PEG (polyether polyol composed of polyethylene glycol and having a number average molecular weight of 2,000), 28.3 parts of DMPA, 105.7 parts of IPDI, and 200 parts of NPAC were charged and reacted at 90°C for 5 hours to obtain a prepolymer solution having an isocyanate group at the end.

Next, a mixture of 16.7 parts of AEA and 150 parts of IPA was added dropwise at room temperature over 60 minutes, and then 10.0 parts of 28% ammonia water and 690 parts of ion-exchanged water were gradually added to neutralize the carboxyl group in the resin and thereby make it water-soluble.

Next, NPAC and IPA were distilled off under reduced pressure to obtain an aqueous solution of polyurethane resin P3 having a solid content concentration of 30%, a weight average molecular weight of 32,000, Mw/Mn=3.3, and an acid value of 39.3 mgKOH/g. However, the acid value in P3 is the value before neutralization.

**[Table 1]**

| Table 1 Synthesis example of urethane resin | | | | | | | | | | | | | | | | | | |
|---|---|---|---|---|---|---|---|---|---|---|---|---|---|---|---|---|---|---|
| | | Parts by mass | | | | | | | | | | | | | Resin properties | | | |
| | | Urethanization reaction | | | | | | | Urea reaction | | Solid content adjustment | | | Tota l | Mw | M w/ M n | Acid value mgKO H/g | Hydro xyl value mgKO H/g |
| | | Polyol | | | | | Pol yis ocy ana te | Solv ent | Pol ya mi ne | Solve nt | | | | | | | | |
| | | PP A | PP G | PE G | DM PA | B D | IP DI | NPA C | AE A | IPA | NP AC | Wat er | 28% ammo nia water | | | | | |
| Synth esis Exam ple 1-1 | P 1 | 135 .7 | 13 .6 | | 28.3 | | 105 .7 | 200 | 16. 7 | 350 | 150 | | | 100 0 | 30,0 00 | 3. 0 | 39.3 | 30.5 |
| Synth esis Exam ple 1-2 | P 2 | 149 .7 | 15 .0 | | 15.1 | 3. 3 | 98. 2 | 200 | 18. 7 | 350 | 150 | | | 100 0 | 28,0 00 | 3. 0 | 21.0 | 33.6 |
| Synth esis Exam ple 1-3 | P 3 | 108 .6 | | 40. 7 | 28.3 | | 105 .7 | 200 | 16. 7 | 150 | | 690. 0 | 10.0 | 135 0 | 32,0 00 | 3. 3 | 39.3 | 30.5 |

The abbreviations listed in Table 1 are shown below.
PPA: polyester polyol composed of a polycondensate of propylene glycol and adipic acid and having a number average molecular weight of 2,000
PPG: polyether polyol composed of polypropylene glycol and having a number average molecular weight of 2,000
PEG: polyether polyol composed of polyethylene glycol and having a number average molecular weight of 2,000
DMPA: 2,2-dimethylolpropanoic acid
BD: 1,4-butanediol
IPDI: isophorone diisocyanate
NPAC: normal propyl acetate
AEA: 2-(2-aminoethylamino)ethanol
IPA: isopropyl alcohol

<Preparation of primer>

### [Preparation Example 2-1] (Primer S1)

87 parts of a polyurethane resin P1 solution, 5 parts of EA, 5 parts of IPA, and 3 parts of silica particles (P-73 manufactured by Mizusawa Industrial Chemicals, Ltd.: hydrophilic silica particles having an average particle size of 3.8 µm) were mixed and stirred using a disperser to obtain primer S1.

### [Preparation Examples 2-2 and 2-3] (Primers S2 and S3)

Primers S2 and S3 were obtained in the same manner as in Preparation Example 2-1, except that the raw materials and blending ratios were changed as shown in Table 2.

**[Table 2]**

| Table 2 Primer preparation example | | | | | | | | | |
|---|---|---|---|---|---|---|---|---|---|
| | | Urethane resin solution | | | Solvent | | | Pigment | Total |
| | | P1 | P2 | P3 | EA | IPA | Water | Silica | |
| Preparation Example 2-1 | S1 | 87 | | | 5 | 5 | | 3 | 100 |
| Preparation Example 2-2 | S2 | | 87 | | 5 | 5 | | 3 | 100 |
| Preparation Example 2-3 | S3 | | | 87 | | | 10 | 3 | 100 |

The abbreviations listed in Table 2 are shown below.
EA: ethyl acetate
IPA: isopropyl alcohol

### <Production of ink>

### (Synthesis of urethane resin I1)

In a reactor equipped with a reflux condenser, a dropping funnel, a gas inlet tube, a stirrer, and a thermometer, 103.2 parts of polyester polyol which is a condensate of 3-methyl-1,5-pentanediol having a number average molecular weight of 2000 and sebacic acid, 35.2 parts of neopentyl glycol, 121.4 parts of isophorone diisocyanate, 0.03 parts of stannous 2-ethylhexyl acid, and 65.1 parts of ethyl acetate were charged and reacted under a nitrogen stream at 90°C for 2 hours, 165.3 parts of ethyl acetate was added, and the mixture was cooled to obtain 490.2 parts of a solvent solution of an isocyanate-terminated prepolymer.

Next, 490.2 parts of the obtained isocyanate-terminated prepolymer was gradually added at room temperature to a mixture of 33.6 parts of isophoronediamine, 1.2 parts of di-n-butylamine, 237.5 parts of ethyl acetate, and 200.6 parts of isopropyl alcohol, and then reacted at 50°C for 1 hour.

Thereafter, 5.3 parts of isophorone diisocyanate was added to adjust the viscosity, and then the solid content was adjusted to 30% with a solvent obtained by mixing ethyl acetate/isopropyl alcohol in a mass ratio of 2/1 to obtain a urethane resin I1 solution having an amine value of 8.2 mgKOH/g, an acid value of 0.2 mgKOH/g, and a weight average molecular weight of 40,000.

### (Polyamide resin I2)

20 parts of polyamide resin I2 (weight average molecular weight 15,000) was mixed and dissolved in 80 parts of a mixed solvent composed of methylcyclohexane:isopropyl alcohol=70:30 (weight ratio) to obtain a polyamide resin I2 solution having a solid content of 20%. This polyamide resin had structural units derived from polymerized fatty acid and/or dimer acid in the polyamide resin, and had an amine value of 3.0 mgKOH/g, an acid value of 1.0 mgKOH/g, and a softening point of 110°C.

### (Vinyl chloride-vinyl acetate copolymer resin (PVC) solution)

30 parts of vinyl chloride-vinyl acetate copolymer resin (product name SOLBIN TA5R, manufactured by Nissin Chemical Co., Ltd.) was mixed and dissolved in 70 parts of ethyl acetate to obtain a vinyl chloride-vinyl acetate copolymer resin solution (abbreviated as PVC solution) having a solid content of 30%.

### (Cellulose-based resin solution)

43 parts of isopropyl alcohol-wet nitrocellulose product (product name DLX5-8, manufactured by Nobel Enterprises) was mixed and dissolved in 57 parts of a mixed solvent composed of ethyl acetate:ethanol=50:50 (weight ratio) to obtain a nitrocellulose solution having a solid content of 30%.

### [Preparation Example 3-1] (Ink R1)

10 parts of indigo pigment P.B.15 (C.I. Pigment Blue 15), 25.0 parts of a polyurethane resin I1 solution, 5 parts of a PVC solution, 10 parts of EA, and 10 parts of IPA were mixed and stirred, and dispersed for 20 minutes using a sand mill as a bead mill. Thereafter, 10 parts of the polyurethane resin I1 solution, 15.0 parts of EA, and 15.0 parts of IPA were mixed and stirred to obtain an ink R1. Table 3 shows the total amounts blended during dispersion and after blending.

### [Preparation Examples 3-2 to 3-4] (Inks R2 to R4)

Inks R2 to R4 were obtained in the same manner as in Ink Preparation Example 3-1, except that the raw materials and blending ratios shown in Table 3 were used. The blending amounts in Table 3 are the total amounts blended during dispersion and after blending.

**[Table 3]**

| Table 3 Ink preparation example | | | | | | | | | |
|---|---|---|---|---|---|---|---|---|---|
| | | Pigment | Resin solution | | | | Solvent | | Total |
| | | Indigo | Urethane resin | Polyamide resin | PVC solution | Cellulose-based resin solution | EA | IPA | |
| | | P.B.15 | I1 | I2 | | | | | |
| Preparation Example 3-1 | R1 | 10 | 35 | | 5 | | 25 | 25 | 100 |
| Preparation Example 3-2 | R2 | 10 | 35 | | | 5 | 25 | 25 | 100 |
| Preparation Example 3-3 | R3 | 10 | | 35 | | 5 | 25 | 25 | 100 |
| Preparation Example 3-4 | R4 | 10 | 40 | | | | 25 | 25 | 100 |

The abbreviations listed in Table 3 are as follows.

P.B.15: C.I. Pigment Blue 15
EA: ethyl acetate
IPA: isopropyl alcohol

### <Production of adhesive agent>

### [Production Example 4-1] (Polyol B1)

In a reaction vessel equipped with a stirrer, a thermometer, a reflux condenser, a dropping tank, and a nitrogen gas inlet tube, 84.4 parts of triol obtained by adding polypropylene glycol to glycerin and having a number average molecular weight of about 400, 6.9 parts of trimethylolpropane, 207.7 parts of polypropylene glycol having a number average molecular weight of about 2,000, 235.4 parts of polypropylene glycol having a number average molecular weight of about 400, 205.4 parts of polytetramethylene glycol having a number average molecular weight of about 2,000, and 60.2 parts of tolylene diisocyanate were charged, and the mixture was heated at 80°C to 90°C for 3 hours while stirring under a nitrogen gas stream to carry out a urethanization reaction, thereby obtaining polyol B1 having urethane bonds.

### [Production Example 4-2] (Polyol solution B2)

In a reaction vessel equipped with a stirrer, a thermometer, a reflux condenser device, a dropping tank, and a nitrogen gas inlet tube, 40 parts of bifunctional polypropylene glycol having a number average molecular weight of about 2,000, 30 parts of bifunctional polypropylene glycol having a number average molecular weight of about 400, 10 parts of trifunctional polypropylene glycol having a number average molecular weight of about 400, 20 parts of bifunctional polyether polyol ECOPROL 2000 having a number average molecular weight of about 2000, and 26 parts of tolylene diisocyanate were charged, and the mixture was heated at 80°C to 90°C for 5 hours while stirring under a nitrogen gas stream to carry out a urethanization reaction. During the urethanization reaction, 0.1% of dibutyltin dilaurate (DBTDL) was added as a reaction catalyst to promote the reaction, and polyether urethane polyol was obtained.

The obtained polyether urethane polyol was adjusted to a solid content concentration of 75% with ethyl acetate to obtain a polyol solution B2.

### [Production Example 4-3] (Polyol solution B3)

In a reaction vessel equipped with a stirrer, a thermometer, a reflux condenser, a dropping tank, and a nitrogen gas inlet tube, 188 parts of ethylene glycol, 316 parts of neopentyl glycol, 179 parts of 1,6-hexanediol, 315 parts of terephthalic acid, 315 parts of isophthalic acid, 64 parts of adipic acid, and 323 parts of sebacic acid were charged, and the mixture was heated to 250°C while stirring under a nitrogen stream to carry out an esterification reaction. A predetermined amount of water was distilled off, the pressure was gradually reduced, and a deglycolization reaction was carried out at 1 mmHg or less for 5 hours to obtain polyester polyol. Thereafter, 8.5 parts of isophorone diisocyanate was gradually added, and the reaction was carried out at 150°C for about 2 hours to obtain polyester polyurethane polyol.

0.4 parts of trimellitic anhydride was added to 100 parts of this polyester polyurethane polyol, and the mixture was reacted at 180°C for about 2 hours. The mixture was then diluted with ethyl acetate until the solid content concentration reached 50%, thereby obtaining a polyol solution B3 containing partially acid-modified polyester polyol having an acid value of 2.2 mgKOH/g.

### [Production Example 4-4] (Polyol solution B4)

In a reaction vessel equipped with a stirrer, a thermometer, a reflux condenser, a dropping tank, and a nitrogen gas inlet tube, 682 parts of isophthalic acid, 274 parts of sebacic acid, 72 parts of adipic acid, 202 parts of ethylene glycol, 506 parts of neopentyl glycol, and 493 parts of 1,6-hexanediol were charged, and the mixture was heated to 250°C while stirring under a nitrogen stream to carry out an esterification reaction. A predetermined amount of water was distilled off, the pressure was gradually reduced, and a deglycolization reaction was carried out at 1 mmHg or less for 5 hours. Thereafter, 95 parts of isophorone diisocyanate was gradually added, and the reaction was carried out at 150°C for about 2 hours to obtain polyester polyurethane polyol.

2.0 parts of ethylene glycol anhydrotrimellitate was added to 100 parts of this polyester polyurethane polyol, and the mixture was reacted at 180°C for about 2 hours. The mixture was then diluted with ethyl acetate until the solid content concentration reached 50%, thereby obtaining a polyol solution B4 containing partially acid-modified polyester polyol having an acid value of 7.8 mgKOH/g.

### [Production Example 4-5] (Polyisocyanate C1)

In a reaction vessel equipped with a stirrer, a temperature system, a reflux condenser, a dropping tank, and a nitrogen gas inlet tube, 371.0 parts of a mixture of 2,4-diphenylmethane diisocyanate and 4,4'-diphenylmethane diisocyanate (mass ratio 50:50), 27.4 parts of triol obtained by adding polypropylene glycol to glycerin and having a number average molecular weight of about 400, 2.6 parts of trimethylolpropane, 31.8 parts of polypropylene glycol having a number average molecular weight of about 400, 289.4 parts of polypropylene glycol having a number average molecular weight of about 2,000, and 77.8 parts of polytetramethylene glycol having a number average molecular weight of about 1,000 were charged, and the mixture was heated at 80°C to 90°C for 3 hours while stirring under a nitrogen gas stream to carry out a urethanization reaction, thereby obtaining polyisocyanate C1 having urethane bonds and an isocyanate group content of 11.1%.

### [Production Example 4-6] (Polyisocyanate solution C2)

In a reaction vessel equipped with a stirrer, a temperature system, a reflux condenser, a dropping tank, and a nitrogen gas inlet tube, 23 parts of bifunctional polypropylene glycol having a number average molecular weight of about 2,000, 18 parts of bifunctional polypropylene glycol having a number average molecular weight of about 400, 2 parts of trifunctional polypropylene glycol having a number average molecular weight of about 400, and 30 parts of 4,4'-diphenylmethane diisocyanate were charged, and the mixture was heated at 70°C to 80°C for 7 hours while stirring under a nitrogen gas stream to carry out a urethanization reaction. After the reaction was completed, 7 parts of a trimethylolpropane adduct of tolylene diisocyanate was mixed. Thereafter, the mixture was diluted with ethyl acetate until the solid content concentration reached 75%, to obtain a polyisocyanate solution containing polyetherurethane polyisocyanate.

80 parts of the polyisocyanate solution and 20 parts of Desmodur L75 (manufactured by Sumika Covestro Urethane Co., Ltd., trimethylolpropane adduct of toluene diisocyanate, NCO group content 13%, solid content concentration 75%) were mixed to obtain a polyisocyanate solution C2.

### [Production Example 4-7] (Polyisocyanate solution C3)

Coronate 2785 (biuret type polyisocyanate derived from hexamethylene diisocyanate, manufactured by Tosoh Corporation) was diluted with ethyl acetate until the solid content concentration reached 50% to obtain a polyisocyanate solution C3.

### <Preparation of adhesive agent>

### [Preparation Example 4-1] (Adhesive agent D1)

50 parts of polyol B1 and 100 parts of polyisocyanate C1 were blended to obtain an adhesive agent D1.

### [Preparation Example 4-2] (Adhesive agent D2)

100 parts of a polyol solution B2 and 100 parts of a polyisocyanate solution C2 were blended, and EA was added to obtain an adhesive agent D2 having a solid content concentration of 30%.

### [Preparation Example 4-3] (Adhesive agent D3)

100 parts of a polyol solution B3 and 8 parts of a polyisocyanate solution C3 were blended, and EA was added to obtain an adhesive agent D3 having a solid content concentration of 30%.

### [Preparation Example 4-4] (Adhesive agent D4)

100 parts of a polyol solution B4 and 8 parts of a polyisocyanate solution C3 were blended, and EA was added to obtain an adhesive agent D4 having a solid content concentration of 30%.

**[Table 4]**

| Table 4 Adhesive agent preparation example | | | | | | | | |
|---|---|---|---|---|---|---|---|---|
| | | Polyol/polyol solution | | | | Polyisocyanate/polyisocyanate solution | | |
| | | | | | | Aromatic aliphatic | Aromatic aliphatic | Aliphatic |
| | | | | | | | | HDI derivative |
| | | B1 | B2 | B3 | B4 | C1 | C2 | C3 |
| Preparation Example 4-1 | D1 | 50 | | | | 100 | | |
| Preparation Example 4-2 | D2 | | 100 | | | | 100 | |
| Preparation Example 4-3 | D3 | | | 100 | | | | 8 |
| Preparation Example 4-4 | D4 | | | | 100 | | | 8 |

### <Production of laminate>

The method for producing the laminate will be described below. The primer and ink were each diluted with a mixed solvent of EA/IPA (mass ratio 70/30) so that the viscosity of the primer was 14 seconds and the viscosity of the ink was 16 seconds (25°C, Zahn cup #3 (manufactured by Rigo Co., Ltd.)), and then gravure printing was performed. In addition, the primer layer had a coating amount of about 1.0 g/m² after drying, and the printed layer had a coating amount of about 2.0 g/m² after drying.

### [Production Example 5-1] (Laminate L1)

The diluted printing ink R1 was printed onto OPP (corona-treated stretched polypropylene film, thickness 20 µm) using a gravure printing machine equipped with a gravure plate having a plate depth of 30 µm, and dried at 50°C to obtain a printed matter having a structure of printed layer (R1)/polyolefin base material layer (OPP). Next, the adhesive agent D1 was applied to the OPP surface of the printed matter using a non-solvent laminator with a coating amount of 1.5 g/m², and then was laminated with CPP (non-stretched polypropylene film, thickness 30 µm) to obtain a laminate L1 having a structure of R1/OPP/D1/CPP.

### [Production Examples 5-2 to 5-7] (Laminates L2 to L7)

The laminates L2 to L7 were obtained in the same manner as in Production Example 5-1, except that the base materials and inks were changed to the contents shown in Table 5.

### [Production Example 5-8] (Laminate L8)

The diluted primer S1 was printed onto OPP (double-sided corona-treated stretched polypropylene film, thickness 20 µm) using a gravure printing machine equipped with a gravure plate having a plate depth of 30 µm, and dried at 50°C to obtain a printed matter having a structure of primer layer (S1)/polyolefin base material layer (OPP). Next, the printing ink R1 was printed on the primer layer in the same procedure to obtain a printed layer (R1)/primer layer (S1)/polyolefin base material layer (OPP).

Next, the adhesive agent D1 was applied to the OPP surface using a non-solvent laminator with a coating amount of 1.5 g/m², and then was laminated with CPP (non-stretched polypropylene film, thickness 30 µm) to obtain a laminate L8 having a structure of R1/S1/OPP/D1/CPP.

### [Production Examples 5-9, 5-10] (Laminates L9, L10)

The laminates L9 to L10 were obtained in the same manner as in Production Example 5-8, except that the inks and primers were changed to the contents shown in Table 5.

### [Production Example 5-11] (Laminate L11)

A printed matter having a structure of printed layer (R1)/polyolefin base material layer (OPP) was obtained in the same manner as in Production Example 5-1. Next, the adhesive agent D2 was applied to the OPP surface of the printed matter using a dry laminator with a coating amount of 2.0 g/m² after drying, and dried, and then was laminated with CPP (non-stretched polypropylene film, thickness 30 µm) to obtain a laminate L11 having a structure of R1/OPP/D2/CPP.

### [Production Examples 5-12 to 5-14] (Laminates L12 to L14)

The laminates L12 to L14 were obtained in the same manner as in Production Example 5-11, except that the adhesive agents and the amounts of adhesive agents applied where changed to the contents shown in Table 5.

### [Production Example 5-15] (Laminate L15)

A printed matter having a structure of printed layer (R1)/polyolefin base material layer (OPP) was obtained in the same manner as in Production Example 5-1. Next, using an extrusion laminator, PP (polypropylene resin, Novatec FL02A, manufactured by Japan Polypropylene Corporation) (thickness 10 µm) melted at 330°C was laminated onto the coated surface of the OPP surface of the printed matter, and at the same time, a non-stretched polypropylene (CPP) film (thickness 30 µm) was further laminated thereon to obtain a laminate L15 having a structure of R1/OPP/PP/CPP.

### [Production Example 5-16] (Laminate L16)

As the base material, PE1 (linear low-density polyethylene resin, density 0.926 g/cm³), PE2 (high-density polyethylene resin, density 0.949 g/cm³), and PE3 (linear low-density polyethylene resin, density 0.926 g/cm³) were co-extruded by an inflation method and corona-treated to obtain a base material having a thickness of 100 µm. In the base material thus obtained, the layer composed of the linear low-density polyethylene resin had a thickness of 30 µm, the layer composed of the high-density polyethylene resin had a thickness of 40 µm, and the layer composed of the linear low-density polyethylene resin had a thickness of 30 µm. Thereafter, the laminate L16 having a structure of printed layer (R1)/polyolefin base material layer (PE) was obtained in the same manner as in Production Example 5-1.

### [Production Example 5-17] (Laminate L19)

A printed matter having a structure of printed layer (R1)/polyolefin base material layer (OPP) was obtained in the same manner as in Production Example 5-1. Next, using an extrusion laminator, PP (polypropylene resin, Novatec FL02A, manufactured by Japan Polypropylene Corporation) (thickness 10 µm) melted at 330°C was laminated onto the coated surface of the OPP surface of the printed matter to obtain a laminate L19 having a structure of R1/OPP/PP.

### [Comparative Production Example 5-A] (Laminate L17)

The diluted printing ink R1 was printed onto OPP (corona-treated stretched polypropylene film, thickness 20 µm) using a gravure printing machine equipped with a gravure plate having a plate depth of 30 µm, and dried at 50°C to obtain a printed matter having a structure of printed layer (R1)/polyolefin base material layer (OPP). Next, the adhesive agent D1 was applied to the printed surface using a non-solvent laminator with a coating amount of 1.5 g/m², and then was laminated with CPP (non-stretched polypropylene film, thickness 30 µm) to obtain a laminate L17 having a structure of OPP/R1/D1/CPP.

### [Comparative Production Example 5-B] (Laminate L18)

The diluted printing ink R1 was printed onto PET (corona-treated polyethylene terephthalate film, thickness 25 µm) using a gravure printing machine equipped with a gravure plate having a plate depth of 30 µm, and dried at 50°C to obtain a printed matter having a structure of printed layer (R1)/polyester base material layer (PET). Next, the adhesive agent D1 was applied to the PET surface using a non-solvent laminator with a coating amount of 1.5 g/m², and then was laminated with CPP (non-stretched polypropylene film, thickness 30 µm) to obtain a laminate L18 having a structure of R1/PET/D1/CPP.

**[Table 5]**

| Table 5 Production example of laminate | | | | | | | |
|---|---|---|---|---|---|---|---|
| | | Structure | Release layer | Lamination method | Coating amount of adhesive agent (g/m²) | Coating amount ratio in entire laminate (%) | Olefin content (%) |
| Production Example 5-1 | L1 | R1/OPP(20)/D1/CPP(30) | R1 | Non-solvent | 1.5 | 3.1 | 93 |
| Production Example 5-2 | L2 | R1/OPP(20)/D1/CPP2(60) | R1 | Non-solvent | 1.5 | 2.0 | 95 |
| Production Example 5-3 | L3 | R1/LLDPE(30)/D1/LLDPE(30) | R1 | Non-solvent | 1.5 | 2.6 | 94 |
| Production Example 5-4 | L4 | R1/KOPP(20)/D1/CPP2(60) | R1 | Non-solvent | 1.5 | 2.0 | 94 |
| Production Example 5-5 | L5 | R2/OPP(20)/D1/CPP(30) | R2 | Non-solvent | 1.5 | 3.1 | 93 |
| Production Example 5-6 | L6 | R3/OPP(20)/D1/CPP(30) | R3 | Non-solvent | 1.5 | 3.1 | 93 |
| Production Example 5-7 | L7 | R4/OPP(20)/D1/CPP(30) | R4 | Non-solvent | 1.5 | 3.1 | 93 |
| Production Example 5-8 | L8 | R1/S1/OPP(20)/D1/CPP(30) | R1/S1 | Non-solvent | 1.5 | 3.0 | 91 |
| Production Example 5-9 | L9 | R1/S2/OPP(20)/D1/CPP(30) | R1/S2 | Non-solvent | 1.5 | 3.0 | 91 |
| Production Example 5-10 | L10 | R1/S3/OPP(20)/D1/CPP(30) | R1/S3 | Non-solvent | 1.5 | 3.0 | 91 |
| Production Example 5-11 | L11 | R1/OPP(20)/D2/CPP(30) | R1 | Dry | 2 | 4.1 | 92 |
| Production Example 5-12 | L12 | R1/OPP(20)/D2/CPP(30) | R1 | Dry | 2.8 | 5.6 | 90 |
| Production Example 5-13 | L13 | R1/OPP(20)/D3/CPP(30) | R1 | Dry | 2.8 | 5.6 | 90 |
| Production Example 5-14 | L14 | R1/OPP(20)/D4/CPP(30) | R1 | Dry | 2.8 | 5.6 | 90 |
| Production Example 5-15 | L15 | R1/OPP(20)/PP(10)/CPP(30) | R1 | Extrusion lamination | 0 | 0.0 | 96 |
| Production Example 5-16 | L16 | R1/PE1(30)/PE2/(40)/PE3(30) | R1 | Inflation | 0 | 0.0 | 98 |
| Production Example 5-17 | L19 | R1/OPP(20)/PP(10) | R1 | Extrusion lamination | 9.1 | 31.1 | 93 |
| Comparative Production Example 5-A | L17 | OPP(20)/R1/D1/CPP(30) | R2 | Non-solvent | 1.5 | 3.1 | 93 |
| Comparative Production Example 5-B | L18 | R1/PET(25)/D1/CPP(30) | R2 | Non-solvent | 1.5 | 2.3 | 41 |

In Table 5, the "release layer" corresponds to the printed layer, and in the "structure," the portion other than the release layer (printed layer) corresponds to the plastic laminate. The abbreviations listed in Table 5 are as follows. The numerical value in parentheses after the abbreviation indicates the thickness (µm).
OPP: corona-treated stretched polypropylene film, thickness 20 µm
LLDPE: corona-treated linear low-density polyethylene film, thickness 30 µm
CPP: non-stretched polypropylene film, thickness 30 µm
CPP2: non-stretched polypropylene film, thickness 60 µm
KOPP: vinylidene chloride coated corona-treated stretched polypropylene film, thickness 20 µm
PET: polyethylene terephthalate film, thickness 12 µm
PP: polypropylene-based resin layer
PE1, PE2, PE3: polyethylene-based resin layer

### <Preparation of release liquid>

### [Preparation Example 6-1] (Release liquid A1)

1 part of POE stearyl ether (polyoxyethylene stearyl ether, POE addition number: 12, HLB: 13.9) as a surfactant, 0.1 part of BYK-1650 (manufactured by BYK Japan Co., Ltd., silicone-based emulsion type antifoaming agent, solid content concentration 27.5%) as an antifoaming agent, 2 parts of sodium hydroxide, and 96.9 parts of water were blended and stirred with a disperser to obtain a release liquid A1.

### [Preparation Examples 6-2 to 6-8, Comparative Preparation Example 6-A] (Release liquids A2 to A9)

The release liquids A2 to A9 were obtained in the same manner as in Production Example 6-1, except that the blending compositions were changed as shown in Table 6.

**[Table 6]**

| Table 6 Release liquid preparation example | | | | | | | | | | | |
|---|---|---|---|---|---|---|---|---|---|---|---|
| | | Surfactant | | | | Antifoaming agent | | | Basic compoun d | Solve nt | Tota l |
| | | Nonioni c | Anionic | Cationic | Amphoteric | Silicone-based | | Non-silicon e-based | Sodium hydroxid e | Water | |
| | | POE stearyl | POE lauryl ether phosphate | Stearylamin e acetate | Lauryl dimethylaminoa cetate betaine | Emulsio n type | Self-emulsifyi ng type | | | | |
| Preparatio | A | 1 | | | | 0.1 | | | 2 | 96.9 | 100 |
| n Example 6-1 | 1 | | | | | | | | | | |
| Preparatio n Example 6-2 | A 2 | | 1 | | | 0.1 | | | 2 | 96.9 | 100 |
| Preparatio n Example 6-3 | A 3 | | | 1 | | 0.1 | | | 2 | 96.9 | 100 |
| Preparatio n Example 6-4 | A 4 | | | | 1 | 0.1 | | | 2 | 96.9 | 100 |
| Preparatio n Example 6-5 | A 5 | 1 | | | | | 0.1 | | 2 | 96.9 | 100 |
| Preparatio n Example 6-6 | A 6 | 1 | | | | | | 0.1 | 2 | 96.9 | 100 |
| Preparatio n Example 6-7 | A 7 | 1 | | | | | | | 2 | 97 | 100 |
| Preparatio n Example 6-8 | A 8 | 1 | | | | 0.1 | | | | 98.9 | 100 |
| Comparati ve Preparatio n Example 6-A | A 9 | | | | | 0.1 | | | 2 | 97.9 | 100 |

The abbreviations listed in Table 6 are shown below.
(Nonionic surfactant)
   POE stearyl ether, POE addition number: 12, HLB: 13.9
(Anionic surfactant)
   POE lauryl ether phosphate POE addition number: 4, HLB: 10.0
(Cationic surfactant)
   Stearylamine acetate HLB: 11.0
(Amphoteric surfactant)
   Lauryl dimethylaminoacetate betaine HLB: 10.0
(Antifoaming agent/emulsion type)
   BYK-1650: manufactured by BYK Japan Co., Ltd., silicone-based emulsion type, solid content concentration 27.5%, main solvent: water
(Antifoaming agent/self-emulsifying type)
   KS-540: manufactured by Shin-Etsu Chemical Co., Ltd., silicone-based self-emulsifying type, solid content concentration 100%
(Antifoaming agent/non-silicone-based)
   BYK-1640: manufactured by BYK Japan Co., Ltd., non-silicone-based, solid content concentration 62%, main solvent: water

### <Evaluation of releasability of release layer>

### [Examples 1 to 29, Comparative Examples 1 to 4]

With use of the laminate (L) and the release liquid described in step 1 of Table 7, the laminates L1 to L19 having a release layer were evaluated for the release and recovery state of the plastic laminate as follows.

40 L of the release liquid and 1.6 kg of samples cut into a size of 3 cm×3 cm respectively from the laminates L1 to L18 were placed in a 50 L kettle and stirred under conditions of 70°C and 2000 rpm. After stirring for 60 minutes, the mixture was sampled, washed with water, and dehydrated. From the obtained samples, 10 sheets of the laminate (B) after separation were sampled, and the removal rate (area %) of the printed layer was visually confirmed and evaluated according to the following criteria. The evaluation results are shown in Table 7.

### (Evaluation criteria)

A (excellent): 95% or more of the printed layer peels off from the plastic laminate.
B (good): 90% or more but less than 95% of the printed layer peels off from the plastic laminate.
C (acceptable): 85% or more but less than 90% of the printed layer peels off from the plastic laminate.
D (unacceptable): 10% or more but less than 85% of the printed layer peels off from the plastic laminate.
E (poor): less than 10% of the printed layer peels off from the plastic laminate, or no peeling occurs.

### <Production of recycled plastic>

### [Example 1]

The laminate (B) obtained by the above-mentioned method for evaluating releasability was further dried with hot air until the moisture content became 0.5% or less. The measurement results of the moisture content and chlorine content of the laminate (B) after drying are shown in Table 7. Thereafter, the dried laminate (B) was placed in a twin-screw extruder, melted and kneaded at a screw rotation speed of 200 rpm and a temperature of 220°C, and discharged from the extrusion device at a discharge pressure of 3 MPa. A 150 mesh filter was used at the discharge section. Thereafter, the laminate (B) was immediately cut using a pelletizer, and cooled by immersion in cold water. In this manner, pellets of recycled plastic from the packaging material (A) were obtained.

### [Examples 2 to 29]

For Examples 2 to 29, pellets of recycled plastic were obtained in the same procedure as in Example 1, except that the conditions were changed as shown in Table 7.

### [Comparative Example 1]

For Comparative Example 1, the laminate L1 was cut into a size of 3 cm×3 cm, and the sample used was not immersed in the release liquid but was only washed with water and dehydrated. Regarding other conditions, pellets of recycled plastic were obtained following the same procedure as in Example 1.

### [Comparative Examples 2 to 4]

For Comparative Examples 2 to 4, pellets of recycled plastic were obtained following the same procedure as in Example 1, except that the conditions were changed as shown in Table 7.

### <Transmittance evaluation>

### [Examples 1 to 29, Comparative Examples 1 to 4]

The pellets of recycled plastic obtained above were respectively extrusion-molded at 220°C using a T-die extruder to produce a film-like molded product having a thickness of 60 µm. Thereafter, the coloring of the molded product was evaluated by measuring the total light transmittance using a haze meter (SH7000, manufactured by NDK Inc.) according to the following criteria. The evaluation results are shown in Table 7.

### (Evaluation criteria)

A (excellent): total light transmittance is 80% or more
B (good): total light transmittance is 70% or more but less than 80%
C (acceptable): total light transmittance is 60% or more but less than 70%
D (unacceptable): total light transmittance is 50% or more but less than 60%
E (poor): total light transmittance is less than 50%

### <Foreign matter and foaming evaluation>

The pellets of recycled plastic obtained above were respectively extrusion-molded at 220°C using a T-die extruder to produce a film-like molded product having a thickness of 60 µm. The number of foreign matters and bubbles that could be visually identified per 0.5 m² of the obtained molded product was counted and evaluated according to the following criteria. The evaluation results are shown in Table 7.

### (Evaluation criteria)

A (excellent): the number of foreign matters and bubbles is less than 20
B (good): the number of foreign matters and bubbles is 20 or more but less than 40
C (acceptable): the number of foreign matters and bubbles is 40 or more but less than 80
D (unacceptable): the number of foreign matters and bubbles is 80 or more but less than 120
E (poor): the number of foreign matters and bubbles is 120 or more

### [Table 7]

**Table 7**

| Example/ Comparativ e Example | Step 1 | | Releasabilit y evaluation | Laminate (B) | | Step 2 | | | Evaluation | |
|---|---|---|---|---|---|---|---|---|---|---|
| | Laminat e | Release liquid | | Moistur e content (%) | Chlorine content (%) | Melting/ kneading temperatu re (°C) | Screw rotation speed rpm | Extrusio n pressure MPa | Coloring Recyclability | |
| | | | | | | | | | Transmi ttance | Foreign matter/ foaming |
| Example 1 | L1 | A1 | A | 0.5> | 0.1> | 220 | 200 | 3 | A | A |
| Example 2 | L2 | A1 | A | 0.5> | 0.1> | 220 | 200 | 3 | A | A |
| Example 3 | L3 | A1 | A | 0.5> | 0.1> | 220 | 200 | 3 | A | A |
| Example 4 | L4 | A1 | A | 0.5> | 0.7 | 220 | 200 | 3 | B | C |
| Example 5 | L5 | A1 | A | 0.5> | 0.1> | 220 | 200 | 3 | A | A |
| Example 6 | L6 | A1 | A | 0.5> | 0.1> | 220 | 200 | 3 | A | A |
| Example 7 | L7 | A1 | B | 0.5> | 0.1> | 220 | 200 | 3 | B | A |
| Example 8 | L8 | A1 | A | 0.5> | 0.1> | 220 | 200 | 3 | A | A |
| Example 9 | L9 | A1 | A | 0.5> | 0.1> | 220 | 200 | 3 | A | A |
| Example 10 | L10 | A1 | A | 0.5> | 0.1> | 220 | 200 | 3 | A | A |
| Example 11 | L11 | A1 | A | 0.5> | 0.1> | 220 | 200 | 3 | A | A |
| Example 12 | L12 | A1 | A | 0.5> | 0.1> | 220 | 200 | 3 | A | B |
| Example 13 | L13 | A1 | A | 0.5> | 0.1> | 220 | 200 | 3 | A | B |
| Example 14 | L14 | A1 | B | 0.5> | 0.1> | 220 | 200 | 3 | B | B |
| Example 15 | L15 | A1 | A | 0.5> | 0.1> | 220 | 200 | 3 | A | A |
| Example 16 | L16 | A1 | A | 0.5> | 0.1> | 220 | 200 | 3 | A | A |
| Example 17 | L1 | A2 | C | 0.5> | 0.1> | 220 | 200 | 3 | C | C |
| Example 18 | L1 | A3 | B | 0.5> | 0.1> | 220 | 200 | 3 | B | B |
| Example 19 | L1 | A4 | B | 0.5> | 0.1> | 220 | 200 | 3 | B | B |
| Example 20 | L1 | A5 | A | 0.5> | 0.1> | 220 | 200 | 3 | A | A |
| Example 21 | L1 | A6 | A | 0.5> | 0.1> | 220 | 200 | 3 | A | A |
| Example 22 | L1 | A7 | B | 0.5> | 0.1> | 220 | 200 | 3 | B | B |
| Example 23 | L1 | A8 | C | 0.5> | 0.1> | 220 | 200 | 3 | C | C |
| Example 24 | L1 | A1 | A | 4 | 0.1> | 220 | 200 | 3 | B | C |
| Example 25 | L1 | A1 | A | 0.5> | 0.1> | 140 | 200 | 10 | B | C |
| Example 26 | L1 | A1 | A | 0.5> | 0.1> | 280 | 200 | 3 | A | B |
| Example 27 | L1 | A1 | A | 0.5> | 0.1> | 220 | 200 | 6 | A | B |
| Example 28 | L1 | A1 | A | 0.5> | 0.1> | 280 | 900 | 3 | A | B |
| Example 29 | L19 | A1 | A | 0.5> | 0.1> | 220 | 200 | 3 | A | A |
| Comparativ e Example 1 | L1 | - | E | 0.5> | 0.1> | 220 | 200 | 3 | E | C |
| Comparativ e Example 2 | L1 | A9 | D | 0.5> | 0.1> | 220 | 200 | 3 | D | C |
| Comparativ e Example 3 | L17 | A1 | D | 0.5> | 0.1> | 220 | 200 | 3 | D | C |
| Comparativ e Example 4 | L18 | A1 | A | 0.5> | 0.1> | 220 | 200 | 3 | C | D |

The above evaluation results show that the production method of the present invention enables the printed layer to be easily released, produces a plastic laminate with little re-adhesion, and further produces a high-quality recycled plastic material with little coloring.

## Claims

1. A method for producing recycled plastic, for obtaining recycled plastic from a packaging material (A), wherein
the packaging material (A) comprises a plastic laminate and a printed layer provided on at least one surface of the plastic laminate, and the printed layer is on an outermost surface of the packaging material (A),
the plastic laminate does not comprise a chromatic colored ink layer, and
a content of polyolefin resin in the packaging material (A) is 80% by mass or more,
the method for producing recycled plastic comprising:
a step 1 of obtaining a laminate (B) by immersing the packaging material (A) in a release liquid comprising a surfactant to remove 85% by mass or more of the printed layer; and
a step 2 of melting and kneading the laminate (B) using an extrusion device provided with a screw and a discharge section.

2. The method for producing recycled plastic according to claim 1, wherein the polyolefin resin is at least one selected from a group consisting of polyethylene-based resin and polypropylene-based resin.

3. The method for producing recycled plastic according to claim 1, wherein the plastic laminate comprises an adhesive agent layer, and the adhesive agent layer is made of a dry lamination adhesive agent or a non-solvent lamination adhesive agent having an acid value of 10 mgKOH/g or less.

4. The method for producing recycled plastic according to claim 3, wherein a dry coating amount of the adhesive agent layer is 6% by mass or less of a total mass of the plastic laminate.

5. The method for producing recycled plastic according to claim 1, wherein the plastic laminate is laminated by extrusion lamination.

6. The method for producing recycled plastic according to claim 1, wherein the plastic laminate is a co-extrusion molded film.

7. The method for producing recycled plastic according to claim 1, wherein the surfactant comprises at least one selected from a group consisting of a nonionic surfactant, an amphoteric surfactant, and an anionic surfactant.

8. The method for producing recycled plastic according to claim 1, wherein the release liquid further comprises a basic compound.

9. The method for producing recycled plastic according to claim 8, wherein the release liquid further comprises an antifoaming agent, and the antifoaming agent is at least one selected from a group consisting of an emulsion type silicone-based compound, a self-emulsifying type silicone-based compound, and a non-silicone-based compound.

10. The method for producing recycled plastic according to claim 1, wherein the printed layer comprises at least one combination selected from a group consisting of urethane resin/vinyl chloride copolymer resin, urethane resin/cellulose resin, and polyamide resin/cellulose resin.

11. The method for producing recycled plastic according to claim 1, wherein a temperature of the melting is 140°C to 250°C.

12. The method for producing recycled plastic according to claim 1, wherein a pressure of the discharge section in the extrusion device is 15 MPa or less.

13. The method for producing recycled plastic according to claim 1, wherein a rotation speed of the screw in the extrusion device is 50 RPM to 1000 RPM.

14. The method for producing recycled plastic according to claim 1, wherein the printed layer comprises a primer layer that is removable by the release liquid.

15. The method for producing recycled plastic according to claim 14, wherein the primer layer comprises an acidic compound.

16. The method for producing recycled plastic according to claim 1, further comprising a drying step of reducing a moisture content of the laminate (B) to 3% by mass or less.

17. The method for producing recycled plastic according to claim 1, wherein a chlorine content of the laminate (B) is 0.4% by mass or less of a total mass of the laminate (B).

18. The method for producing recycled plastic according to claim 1, wherein the adhesive agent layer comprises heat-sealable resin.
